# EUROPEAN PATENT APPLICATION

(11) **EP 4 494 465 A1**
(43) Date of publication of application: **22.01.2025**
(21) Application number: 23770569.4
(22) Date of filing: 08.03.2023
(51) Int. Cl.: A01N 25/04, A01N 43/36, A01N 43/56, A01N 43/58, A01N 47/02, A01N 47/06, A01N 47/30, A01N 53/08, A01P 7/04

(54) **AGROCHEMICAL EMULSIFIABLE COMPOSITION**

(30) Priority: 14.03.2022 JP 2022038929; 14.03.2022 JP 2022038930
(71) Applicant: Nippon Kayaku Kabushiki Kaisha, Tokyo 100-0005 (JP)
(72) Inventor: MURASE, Takanori, Kamisu-shi, Ibaraki 314-0255 (JP); KOBAYASHI, Takeru, Kamisu-shi, Ibaraki 314-0255 (JP); MURAMOTO, Hiroki, Kamisu-shi, Ibaraki 314-0255 (JP)
(74) Representative: Ter Meer Steinmeister & Partner
(86) International application number: PCT/JP2023/008739
(87) International publication number: WO 2023/176613

(57) **Abstract**

The present invention relates to an agrochemical emulsifiable composition containing: an agrochemical component having an octanol-water partition coefficient (LogPow) of 4.0 or more as an agrochemical active ingredient (A); at least one selected from the group consisting of a fatty acid methyl ester (b1), a fatty acid amide (b2), and an aromatic hydrocarbon solvent (b3) as a solvent (B); and a combination of an anionic surfactant (c1) and a nonionic surfactant (c2) as an emulsifier (C). The agrochemical emulsifiable composition is a composition that has excellent storage stability in an emulsifiable formulation using a poorly water-soluble agrochemical active ingredient, and can exhibit a stable emulsified state and sufficient insecticidal efficacy when prepared into a spray emulsion by mixing with water.

## Description

### Technical Field

The present invention relates to an agrochemical emulsifiable composition including an agrochemical active ingredient having an octanol-water partition coefficient (LogPow) of 4.0 or more.

### Background Art

In recent years, agrochemicals are indispensable for maintaining the quality of agricultural crops, while on the other hand, it is required to reduce the use amount of agrochemicals from the viewpoints of economic efficiency and environmental impact. An agrochemical emulsifiable concentrate is known as a formulation form capable of appropriately spreading a poorly water-soluble agrochemical active ingredient. This is a solution formulation in which an agrochemical active ingredient is dissolved in a solvent together with an emulsifier. At the time of agrochemical application, this is mixed with water to prepare a homogeneous emulsion, and the emulsion is applied to chemical spraying. An agrochemical emulsifiable concentrate is a useful formulation because it can be produced by a simple method.

However, in agrochemical emulsifiable concentrates, an aromatic solvent such as xylene or ethylbenzene is often used in addition to an agrochemical insecticidal component, and it is particularly desired to reduce the amount of the agrochemical emulsifiable concentrates in consideration of the influence of organic solvents. Therefore, an agrochemical emulsifiable concentrate that can be produced using a solvent having low toxicity and can be used in a smaller amount than conventional agrochemical formulations, is desired.

As an agrochemical emulsifiable concentrate avoiding the use of an aromatic solvent, Patent Literature 1 discloses an emulsifiable concentrate in which etoxazole is used as an agrochemical insecticidal component, and a natural vegetable oil is used as a solvent. However, the agent is limited in terms of solubility, and the efficacy is not clearly known. Furthermore, as an agrochemical emulsifiable concentrate in which a fatty acid derivative is used as a solvent, Patent Literature 2 discloses a composition containing a fatty acid amide, a fatty acid alkyl ester, and a triglyceride fatty acid ester. However, the active component that can be applied to this composition is limited to herbicidal active components, and Patent Literature 2 insists only on the suppression of drift during spraying, while nothing is mentioned about efficacy.

Furthermore, if the agrochemical active ingredient of the agrochemical emulsifiable concentrate is crystalline, crystals derived from the agrochemical active ingredient may precipitate due to a temperature change during storage. An agrochemical emulsifiable concentrate is diluted with water at the time of use and is used in a state of being formed into an emulsion; however, at that time, as a solvent in the emulsion is gradually dissolved in water, or as the solvent is volatilized, the solubility of the agrochemical active ingredient in the emulsion is reduced, and crystals of the agrochemical active ingredient may be precipitated in water. When the agrochemical active ingredient is precipitated in a formulation and a spray preparation emulsified liquid, there is a disadvantage for the user, such as a decrease in the efficacy and clogging of the sprayer filter. For this reason, it is desired that an agrochemical emulsifiable concentrate is a formulation excellent in terms of solution stability and emulsified liquid stability, in which crystals are not precipitated during storage of the formulation and in a prepared emulsified liquid for spraying.

For example, Patent Literature 3 reports that an agrochemical emulsifiable concentrate in which a mixed solvent of an amide-based polar solvent and a non-polar solvent and a surfactant are used for fluxametamide, pyridaben, amisulbrom, or quizalofop-p-ethyl as an agrochemical active ingredient had favorable emulsification stability even after being diluted with water.

Flometoquin is known as a quinoline-based insecticidal active ingredient (Patent Literature 4), and is provided to the market as a flowable formulation. Patent Literatures 5 to 8 describe flowable formulations and wettable powder formulations containing flometoquin as an agrochemical active ingredient. It is to be noted that flometoquin has a physical property that causes a decomposition reaction easily under basic or acidic conditions, and therefore has a possibility of causing a problem in storage stability depending on the type of solvent or surfactant.

### Citation List

### Patent Literature

Patent Literature 1: JP 2011-148756 A
Patent Literature 2: JP 2015-512391 A
Patent Literature 3: WO 2019/230621 A
Patent Literature 4: WO 2006/013896 A
Patent Literature 5: WO 2011/105349 A
Patent Literature 6: WO 2014/119620 A
Patent Literature 7: JP 2014-144944 A
Patent Literature 8: WO 2019/235602 A

### Summary of Invention

### Technical Problem

An object of the present invention is to provide an agrochemical emulsifiable composition that contains a poorly water-soluble agrochemical insecticidal component as an active ingredient, has excellent storage stability, and also has a favorable emulsified state at the time of water dilution.

### Solution to Problem

The present inventors have extensively conducted studies to achieve the above-mentioned object, and resultantly found that when a fatty acid methyl ester, a fatty acid amide, an aromatic hydrocarbon solvent, or a combination thereof is used as a solvent, and a combination of an anionic surfactant and a nonionic surfactant is used as an emulsifier, for an agrochemical active ingredient having an octanol-water partition coefficient (LogPow) of 4.0 or more, an agrochemical emulsifiable composition that contains the active ingredient in a practical amount as an agrochemical and has favorable storage stability and a favorable emulsified state at the time of water dilution can be obtained, thus completing the present invention.

That is, the present invention includes the following inventions.
[1] An agrochemical emulsifiable composition comprising: an agrochemical active ingredient (A); a solvent (B); and an emulsifier (C), wherein
   the agrochemical active ingredient (A) has an octanol-water partition coefficient (LogPow) of 4.0 or more,
   the solvent (B) is at least one selected from the group consisting of a fatty acid methyl ester (b1), a fatty acid amide (b2), and an aromatic hydrocarbon solvent (b3), and
   the emulsifier (C) comprises an anionic surfactant (c1) and a nonionic surfactant (c2).
[2] The agrochemical emulsifiable composition according to [1], comprising 1% to 20% by mass of the agrochemical active ingredient (A), 50% to 95% by mass of the solvent (B), and 1% to 30% by mass of the emulsifier (C), with respect to a total mass of the agrochemical emulsifiable composition.
[3] The agrochemical emulsifiable composition according to [1] or [2], wherein the agrochemical active ingredient (A) is at least one selected from the group consisting of flometoquin, carbosulfan, benfuracarb, cadusafos, chlorpyrifos, prothiofos, profenofos, dienochlor, fipronil, fluxametamide, broflanilide, acrinathrin, allethrin, etofenprox, cyhalothrin, cyfluthrin, cypermethrin, silafluofen, tefluthrin, tralomethrin, bifenthrin, perethrin, fenvalerate, fenpropathrin, flucythrinate, fluvalinate, permethrin, indoxacarb, metaflumizone, abamectin, emamectin benzoate, milbemectin, lepimectin, acynonapyr, amitraz, flubendiamide, tebufenpyrad, tolfenpyrad, pyridaben, fenazaquin, pyrimidifen, fenpyroximate, cyenopyrafen, cyflumetofen, pyflubumide, acequinocyl, fluacrypyrim, diafenthiuron, propargite, tetradifon, chlorfenapyr, pyriproxyfen, tebufenozide, chlorfluazuron, teflubenzuron, novaluron, flufenoxuron, lufenuron, clofentezine, etoxazole, buprofezin, spirodiclofen, spiromesifen, and pyridalyl.
[4] The agrochemical emulsifiable composition according to [3], wherein the agrochemical active ingredient (A) is at least one selected from the group consisting of flometoquin, pyridaben, tolfenpyrad, diafenthiuron, chlorfenapyr, fipronil, and cypermethrin.
[5] The agrochemical emulsifiable composition according to [4], wherein the agrochemical active ingredient (A) is flometoquin.
[6] The agrochemical emulsifiable composition according to [4], wherein the agrochemical active ingredient (A) is at least one selected from the group consisting of pyridaben, tolfenpyrad, diafenthiuron, chlorfenapyr, fipronil, and cypermethrin.
[7] The agrochemical emulsifiable composition according to any one of [1] to [6], wherein the solvent (B) is at least two selected from the group consisting of a fatty acid methyl ester (b1), a fatty acid amide (b2), and an aromatic hydrocarbon solvent (b3).
[8] The agrochemical emulsifiable composition according to [7], wherein the solvent (B) is a combination of the fatty acid methyl ester (b1) and the fatty acid amide (b2) or a combination of the fatty acid methyl ester (b1), the fatty acid amide (b2), and the aromatic hydrocarbon solvent (b3).
[9] The agrochemical emulsifiable composition according to [8], wherein the solvent (B) is a combination of the fatty acid methyl ester (b1) and the fatty acid amide (b2) and contains 15% to 70% by mass of the fatty acid methyl ester (b1) and 15% to 70% by mass of the fatty acid amide (b2) with respect to the total mass of the agrochemical emulsifiable composition, and a content of the solvent (B) is 60% to 90% by mass with respect to the total mass of the agrochemical emulsifiable composition.
[10] The agrochemical emulsifiable composition according to any one of [1] to [6], wherein the solvent (B) is the fatty acid methyl ester (b1) or the fatty acid amide (b2) .
[11] The agrochemical emulsifiable composition according to any one of [1] to [10], wherein the fatty acid methyl ester (b1) is a saturated or unsaturated fatty acid methyl ester having 6 to 30 carbon atoms, or a mixture thereof.
[12] The agrochemical emulsifiable composition according to [11], wherein the fatty acid methyl ester (b1) is methyl caprylate, methyl caprate, methyl laurate, methyl myristate, methyl palmitate, methyl oleate, methyl erucate, methyl rapeseed fatty acid, methyl coconut fatty acid, or a mixture thereof.
[13] The agrochemical emulsifiable composition according to any one of [1] to [12], wherein the fatty acid amide (b2) is a saturated or unsaturated fatty acid amide having 6 to 20 carbon atoms, or a mixture thereof.
[14] The agrochemical emulsifiable composition according to [13], wherein the fatty acid amide (b2) is N,N-dimethyloctanamide, N,N-dimethyldecanamide, N,N-dimethyldodecanamide, N,N-dimethyl 9-decenamide, N,N-dimethyl 9-dodecenamide, N,N-dimethyltetradecanamide, or a mixture thereof.
[15] The agrochemical emulsifiable composition according to any one of [1] to [14], wherein the aromatic hydrocarbon solvent (b3) is alkylbenzene, alkylnaphthalene, diphenylethane, phenyl xylyl ethane, or a mixture thereof.
[16] The agrochemical emulsifiable composition according to any one of [1] to [15], wherein the anionic surfactant (c1) is an alkylarylsulfonic acid salt, a dialkyl sulfosuccinic acid salt, a polyoxyalkylene (poly)arylphenyl ether sulfuric acid ester, a polyoxyalkylene (poly)arylphenyl ether phosphoric acid ester, a polyoxyethylene alkylaryl phosphoric acid ester, a polyoxyethylene alkyl phosphoric acid ester, or a mixture thereof.
[17] The agrochemical emulsifiable composition according to [16], wherein the anionic surfactant (c1) is an alkylbenzenesulfonic acid salt.
[18] The agrochemical emulsifiable composition according to any one of [1] to [17], wherein the nonionic surfactant (c2) is polyoxyalkylene castor oil, polyoxyalkylene hydrogenated castor oil, a polyoxyalkylene alkyl ether, a polyoxyethylene polyoxypropylene block copolymer-type surfactant, a polyoxyalkylene (poly)aryl phenyl ether, formaldehyde condensate of a polyoxyalkylene (poly)aryl phenyl ether, a polyoxyalkylene fatty acid ester, a polyoxyalkylene sugar fatty acid ester, polyoxyalkylene (poly)aryl aryl phosphoric acid ester, a (poly)glycerin fatty acid ester, and a sugar fatty acid ester, or a mixture thereof.
[19] The agrochemical emulsifiable composition according to any one of [1] to [18], wherein the nonionic surfactant (c2) is polyoxyalkylene castor oil, a polyoxyalkylene alkyl ether, polyoxyalkylene (poly)aryl phenyl ether, formaldehyde condensate of a polyoxyalkylene (poly)aryl phenyl ether, and a polyoxyalkylene sugar fatty acid ester, or a mixture thereof.
[20] An agrochemical solution formulation comprising the agrochemical emulsifiable composition according to any one of [1] to [19].
[21] A method for controlling agricultural pests, the method comprising:
   diluting the agrochemical emulsifiable composition according to any one of [1] to [19] or the agrochemical solution formulation according to [20] with water to prepare an agrochemical spray liquid; and
   spraying the prepared agrochemical spray liquid.

### Advantageous Effects of Invention

An emulsified dispersion prepared by mixing the agrochemical emulsifiable composition of the present invention with water has excellent emulsifiability and emulsification stability, and can exhibit a sufficient insecticidal effect.

### Description of Embodiments

The agrochemical emulsifiable composition of the present invention contains an agrochemical active ingredient (A) having a LogPow of 4.0 or more as an active ingredient.

LogPow is a physical property value based on the octanol-water partition coefficient, and in the present invention, LogPow is a numerical value measured by a flask shaking method (OECD Test Guidline 107) or an HPLC method (OECD Test Guidline 117).

The gist of the present invention is to apply a poorly water-soluble agrochemical active ingredient having a LogPow of 4.0 or more, and preferably, an agrochemical active ingredient having a LogPow of 4.0 or more and a degree of water solubility at 25°C of 1.0 mg/mL or less, and more preferably, an agrochemical active ingredient having a LogPow of 4.0 or more and a degree of water solubility of 0.8 mg/mL or less, can be applied.

Examples of the agrochemical active ingredient (A) included in the agrochemical emulsifiable composition of the present invention include flometoquin, carbosulfan, benfuracarb, cadusafos, chlorpyrifos, prothiofos, profenofos, dienochlor, fipronil, fluxametamide, broflanilide, acrinathrin, allethrin, etofenprox, cyhalothrin, cyfluthrin, cypermethrin, silafluofen, tefluthrin, tralomethrin, bifenthrin, pyrethrin, fenvalerate, fenpropathrin, flucythrinate, fluvalinate, permethrin, indoxacarb, metaflumizone, abamectin, emamectin benzoate, milbemectin, lepimectin, acynonapyr, amitraz, flubendiamide, tebufenpyrad, tolfenpyrad, pyridaben, fenazaquin, pyrimidifen, fenpyroximate, cyenopyrafen, cyflumetofen, pyflubumide, acequinocyl, fluacrypyrim, diafenthiuron, propargite, tetradifon, chlorfenapyr, pyriproxyfen, tebufenozide, chlorfluazuron, teflubenzuron, novaluron, flufenoxuron, lufenuron, clofentezine, etoxazole, buprofezin, spirodiclofen, spiromesifen, and pyridalyl. These may be used singly or may be used as a mixed formulation including two or more kinds of agrochemical active ingredients.

The LogPow values and the degrees of water solubility of the above-described agrochemical active ingredients are as shown in the following tables.

**[Table 1]**

| Agrochemical active ingredient | LogPow | (measurement method) | Degree of water- solubility (mg/mL) | (temperature) |
|---|---|---|---|---|
| Flometoquin | 5.41 | (HPLC) | 1.2 × 10⁻⁵ | (20°C) |
| Carbosulfan | 5.45 | - | 3.0 × 10⁻³ | (25°C) |
| Benfuracarb | 4.22 | (Flask shaking) | 8 × 10⁻³ | (20°C) |
| Cadusafos | 4.08 | (HPLC) | 241 × 10⁻³ | (20°C) |
| Chlorpyrifos | 4.70 | (Flask shaking) | 0.941 × 10⁻³ | (25°C) |
| Prothiofos | 5.67 | (Flask shaking) | 0.07 × 10⁻³ | (20°C) |
| Profenofos | 4.435 | - | 28 × 10⁻³ | (22°C) |
| Dienochlor | 7.2 | - | 2.6 × 10⁻⁵ | (25°C) |
| Fipronil | 4.0 | (Flask shaking) | 3.78 × 10⁻³ | (20°C) |
| Fluxametamide | 5.0 | (HPLC) | 5.4 × 10⁻⁵ | (20°C) |
| Broflanilide | 5.2 | (Flask shaking) | 0.71 × 10⁻³ | (20°C) |
| Acrinathrin | 5.6 | (Flask shaking) | 6 × 10⁻⁷ | (25°C) |
| Allethrin | 4.96 | - | 0.987 × 10⁻³ | (25°C) |
| Etofenprox | 6.9 | (HPLC) | 22.5 × 10⁻⁶ | (20°C) |
| Cyhalothrin | 6.9 | - | 4.2 × 10⁻⁶ | (20°C) |
| Cyfluthrin | 6.00 | - | 2.0 × 10⁻⁶ | (20°C) |
| Cypermethrin | 6.3 | - | 0.9 × 10⁻⁵ | (20°C) |
| Silafluofen | 8.2 | - | 1 × 10⁻⁶ | (20°C) |
| Tefluthrin | 6.4 | - | 1.6 × 10⁻⁵ | (20°C) |
| Tralomethrin | 5.05 | (Flask shaking) | 8 × 10⁻⁵ | (25°C) |
| Bifenthrin | 6.6 | (HPLC) | < 1 × 10⁻⁷ | (20-25°C) |
| Pyrethrin | 5.6 | - | 9 × 10⁻³ | - |
| Fenvalerate | 6.53 | - | < 1 × 10⁻⁵ | (25°C) |
| Fenpropathrin | 6.00 | (Flask shaking) | 1.03 × 10⁻⁵ | (25°C) |
| Flucythrinate | 4.74 | - | 9.6 × 10⁻⁵ | (20°C) |
| Fluvalinate | 4.26 | (Flask shaking) | 1.12 × 10⁻⁶ | (20°C) |
| Permethrin | 6.36 | (Flask shaking) | 0.2 × 10⁻³ | (20°C) |
| Indoxacarb | 4.65 | (Flask shaking) | 0.2 × 10⁻³ | (25°C) |
| Metaflumizone (E-form) | 5.1 | (HPLC) | 1.07 × 10⁻⁶ | (20°C) |
| Metaflumizone (Z-form) | 4.4 | (HPLC) | 1.87 × 10⁻⁶ | (20°C) |
| Abamectin | 4.4 ± 0.3 | (Flask shaking) | 1.21 × 10⁻³ | (25°C) |
| Emamectin benzoate | 5.7 | - | 2.4 × 10⁻² | (25°C) |
| Milbemectin (M.A3) | > 4.94 | (Flask shaking) | 0.88 × 10⁻³ | (20°C) |

**[Table 2]**

| Agrochemical active ingredient | LogPow | (measurement method) | Degree of water-solubility (mg/mL) | (temperature) |
|---|---|---|---|---|
| Milbemectin (M.A4) | > 5.06 | (Flask shaking) | 7.2 × 10⁻³ | (20°C) |
| Lepimectin | 6.5 | (HPLC) | 103.47 × 10⁻⁶ | (25°C) |
| Acynonapyr | 6.5 | - | 8.89 × 10⁻⁷ | (20°C) |
| Amitraz | 5.5 | - | 9.4 × 10⁻⁵ | (25°C) |
| Flubendiamide | 4.20 | (Flask shaking) | 2.99 × 10⁻⁵ | (20°C) |
| Tebufenpyrad | 4.93 | (Flask shaking) | 2.61 × 10⁻³ | (25°C) |
| Tolfenpyrad | 5.6 | (Flask shaking) | 8.7 × 10⁻⁵ | (25°C) |
| Pyridaben | 6.4 | (Flask shaking) | 1.2 × 10⁻⁵ | (24°C) |
| Fenazaquin | 5.71 | - | 1.02 × 10⁻⁵ | - |
| Pyrimidifen | 4.59 | (Flask shaking) | 2.17 × 10⁻³ | (25°C) |
| Fenpyroximate | 5.01 | (Flask shaking) | 1.5 × 10⁻⁵ | (20°C) |
| Cyenopyrafen | 5.6 | (HPLC) | 0.3 × 10⁻³ | (20°C) |
| Cyflumetofen | 4.3 | (HPLC) | 2.81 × 10⁻⁵ | (20°C) |
| Pyflubumide | 5.34 | (Flask shaking) | 2.7 × 10⁻⁴ | (20°C) |
| Acequinocyl | > 6.2 | (HPLC) | 6.7 × 10⁻⁶ | (25°C) |
| Fluacrypyrim | 4.64 | (Flask shaking) | 3.44 × 10⁻⁴ | (20°C) |
| Diafenthiuron | 5.8 | - | 6.2 × 10⁻⁵ | (25°C) |
| Propargite | 5.7 | - | 0.63 × 10⁻³ | (25°C) |
| Tetradifon | 4.6 | (HPLC) | 6 × 10⁻⁵ | (20°C) |
| Chlorfenapyr | 4.8 | (Flask shaking) | 0.12 × 10⁻³ | (25°C) |
| Pyriproxyfen | 5.37 | (Flask shaking) | 3.67 × 10⁻⁴ | (25°C) |
| Tebufenozide | 4.25 | (Flask shaking) | 0.83 × 10⁻³ | (25°C) |
| Chlorfluazuron | 5.9 | (HPLC) | 1.2 × 10⁻⁵ | (20°C) |
| Teflubenzuron | > 4.3 | (Flask shaking) | 5.0 × 10⁻⁵ | (20°C) |
| Novaluron | 4.3 | (HPLC) | 3 × 10⁻⁶ | (20°C) |
| Flufenoxuron | 4.01 | (Flask shaking) | 4.3 × 10⁻⁶ | (25°C) |
| Lufenuron | 5.12 | (HPLC) | <6.0 × 10⁻⁵ | (25°C) |
| Clofentezine | 4.1 | (HPLC) | 2.52 × 10⁻⁶ | (22°C) |
| Etoxazole | 5.52 ± 0.58 | - | 7.04 × 10⁻⁵ | (20°C) |
| Buprofezin | 4.80 | (HPLC) | 3.87 × 10⁻⁵ | (20°C) |
| Spirodiclofen | 5.83 | (Flask shaking) | 5 × 10⁻⁵ | (20°C) |
| Spiromesifen | 4.55 | (HPLC) | 0.13 × 10⁻³ | (20°C) |
| Pyridalyl | 8.1 | (HPLC) | 1.5 × 10⁻⁷ | (25°C) |

Preferred examples of the agrochemical active ingredient (A) to be applied to the present invention include pyrethroid-based insecticidal active ingredients such as acrinathrin, allethrin, etofenprox, cyhalothrin, cyfluthrin, cypermethrin, silafluofen, tefluthrin, tralomethrin, bifenthrin, pyrethrin, fenvalerate, fenpropathrin, flucythrinate, fluvalinate, and permethrin; pyrazolecarboxamide-based insecticidal active ingredients such as tebufenpyrad and tolfenpyrad fenpyroximate; benzoylurea-based insecticidal active ingredients such as diafenthiuron, chlorfluazuron, teflubenzuron, novaluron, flufenoxuron and lufenuron; flometoquin, chlorfenapyr, fipronil, and pyridaben.

More preferred examples of the agrochemical active ingredient (A) include flometoquin, pyridaben, tolfenpyrad, diafenthiuron, chlorfenapyr, fipronil, and cypermethrin.

As the agrochemical active ingredient (A) to be applied to the present invention, flometoquin is particularly preferred. Flometoquin is a compound described on page 223 of Pesticide Handbook 2021 edition (edited and published by Japan Plant Protection Association), and its chemical name is 2-ethyl-3,7-dimethyl-6-[4-(trifluoromethoxy)phenoxy]-4-quinolinyl=methyl=carbonate. Flometoquin is a white solid compound having a melting point of 116.6°C to 118.3°C, a LogPow value of 5.41 (n-octanol/water HPLC method), and a degree of water solubility (20°C) of 1.20×10⁻⁵ mg/mL. Flometoquin can be produced, for example, by the method described in WO 2006/013896.

According to the present invention, it is preferable to use an agrochemical active ingredient (A) having an appropriate purity as an agrochemical active ingredient, and an agrochemical active ingredient having a purity of 80% or more, and preferably 90% or more, as determined by a high performance liquid chromatography method (area ratio) may be used.

The content of the agrochemical active ingredient (A) is preferably 1% to 20% by mass, and more preferably 1% to 15% by mass, based on the total mass of the agrochemical emulsifiable composition. When flometoquin is applied as the agrochemical active ingredient (A), the content of flometoquin is preferably 1% to 20% by mass, more preferably 1% to 15% by mass, and particularly preferably 1% to 10% by mass, based on the total mass of the agrochemical emulsifiable composition.

The solvent (B) included in the agrochemical emulsifiable composition of the present invention is a solvent which is liquid at normal temperature (15°C), and which gives, when gently mixed with the same volume of pure water at a temperature of 20°C at 1 atm, a mixed liquid having a non-uniform appearance even after the flow subsides.

The solvent (B) applied to the present invention is at least one selected from the group consisting of a fatty acid methyl ester (b1), a fatty acid amide (b2), and an aromatic hydrocarbon solvent (b3). Since the fatty acid methyl ester (b1) and the fatty acid amide (b2) can be produced by being derived from plant or animal sources, the fatty acid methyl ester (b1) and the fatty acid amide (b2) are solvents having low toxicity and very low percentage contents of volatile organic compounds, and are solvents that exhibit low toxicity to users and low environmental impact.

The fatty acid methyl ester (b1) is preferably a saturated or unsaturated fatty acid methyl ester having 6 to 30 carbon atoms, and more preferably a saturated or unsaturated fatty acid methyl ester having 8 to 24 carbon atoms. Examples thereof include methyl caprylate, methyl caprate, methyl laurate, methyl myristate, methyl palmitate, methyl oleate, methyl erucate, methyl rapeseed fatty acid, and methyl coconut fatty acid, and methyl coconut fatty acid is particularly preferable. These may be used singly or as a mixture.

As the fatty acid methyl ester (b1), a commercially available product may be used, and examples thereof include a mixture of methyl caprylate and methyl caprate (Stepan C-25 (trade name), Stepan), a mixture of methyl laurate and methyl myristate (Stepan C-42 (trade name), Stepan), methyl caprylate (TOENOL #2008-95 (trade name), Toei Chemical), methyl caprate (TOENOL #2010-95 (trade name), Toei Chemical), methyl laurate (TOENIL #2012-95 (trade name), Toei Chemical), methyl erucate ester (TOENOL #2220-90 (trade name), Toei Chemical), methyl tallowate (TOENOL #3050 (trade name), Toei Chemical), methyl rapeseed fatty acid (TOENOL #3120 (trade name), Toei Chemical), methyl coconut fatty acid (EXCEPARL MC (trade name), Kao), methyl laurate (EXCEPARL ML-85 (trade name), Kao), and methyl oleate (EXCEPARL M-OL (trade name), Kao). Methyl coconut fatty acid (EXCEPARL MC (trade name), Kao) is particularly preferable.

The fatty acid amide (b2) is preferably a saturated or unsaturated fatty acid amide having 6 to 20 carbon atoms, and more preferably a saturated or unsaturated fatty acid amide having 8 to 16 carbon atoms. The amide moiety is preferably a dialkylamide. Examples thereof include N,N-dimethyloctanamide, N,N-dimethyldecanamide, N,N-dimethyldodecanamide, N,N-dimethyl 9-decenamide, N,N-dimethyl 9-dodecenamide, and N,N-dimethyltetradecanamide. Particularly, N,N-dimethyldecanamide is preferable. These may be used singly or as a mixture.

As the fatty acid amide (b2), a commercially available product may be used, and examples thereof include a mixture of N,N-dimethyloctanamide and N,N-dimethyldecanamide (Hallcomid M-8-10 (trade name), Stepan), N,N-dimethyldecanamide (Hallcomid M-10 (trade name), Stepan), a mixture of N,N-dimethyldodecanamide and N,N-dimethyltetradecanamide (Hallcomid M-12-14 (trade name), Stepan), N,N-dimethyl 9-decenamide (Hallcomid 1025 (trade name), Stepan), N,N-dimethyl 9-dodecenamide (Hallcomid 1225 (trade name), Stepan), a mixture of N,N-dimethyloctanamide and N,N-dimethyldecanamide (Rhodiasolv ADMA810 (trade name), Solvay), and N,N-dimethyldecanamide (Rhodiasolv ADMA10 (trade name), Solvay). N,N-dimethyldecanamide (Hallcomid M-10 (trade name), Stepan) or N,N-dimethyldecanamide (Rhodiasolv ADMA10 (trade name), Solvay) is particularly preferable.

The aromatic hydrocarbon solvent (b3) is a hydrocarbon solvent containing at least one aromatic ring in one molecule, and examples thereof include alkylbenzenes such as solvent naphtha, xylene, or trimethylbenzene; alkylnaphthalene, diphenylethane, and phenyl xylyl ethane. These may be used singly or as a mixture.

The aromatic hydrocarbon solvent (b3) is preferably an aromatic hydrocarbon solvent having a high boiling point whose distillation fraction occurs at 150°C or higher, and is preferably an aromatic hydrocarbon solvent whose distillation fraction occurs at 150°C to 300°C. More preferred examples thereof include an aromatic hydrocarbon solvent whose distillation fraction occurs at 150°C to 190°C, an aromatic hydrocarbon solvent whose distillation fraction occurs at 180°C to 210°C, an aromatic hydrocarbon solvent whose distillation fraction occurs at 190°C to 250°C, and an aromatic hydrocarbon solvent whose distillation fraction occurs at 230°C to 300°C. A commercially available product may be used, and examples thereof include commercially available products such as SWASOL 1000 (trade name, Maruzen Petrochemical, distillation fraction 150°C to 185°C), SWASOL 1500 (trade name, Maruzen Petrochemical, distillation fraction 180°C to 210°C), SWASOL 1800 (trade name, Maruzen Petrochemical, distillation fraction 195°C to 250°C), SOLVESSO 100 (trade name, Exxon Mobil, distillation fraction 161°C to 179°C), SOLVESSO 150 (trade name, Exxon Mobil, distillation fraction 181°C to 211°C), SOLVESSO 200 (trade name, Exxon Mobil, distillation fraction 234°C to 284°C), SOLVESSO 150ND (trade name, Exxon Mobil, distillation fraction 180°C to 193°C), and SOLVESSO 200ND (trade name, Exxon Mobil, distillation fraction 247°C to 301°C). SWASOL 1500 (trade name, Maruzen Petrochemical) and SOLVESSO 150ND (trade name, Exxon Mobil) are particularly preferred.

The content of the solvent (B) is preferably 50% to 95% by mass, and more preferably 60% to 90% by mass, with respect to the total mass of the agrochemical emulsifiable composition.

As the solvent (B), the fatty acid methyl ester (b1), the fatty acid amide (b2), or the aromatic hydrocarbon solvent (b3) may be used alone, or two or more kinds thereof may be used in combination. Examples of the mode of mixed use include a mode of using a mixed solvent of the fatty acid methyl ester (b1) and the fatty acid amide (b2), a mode of using a mixed solvent of the fatty acid amide (b2) and the aromatic hydrocarbon solvent (b3), a mode of using a mixed solvent of the fatty acid methyl ester (b1) and the aromatic hydrocarbon solvent (b3), and a mode of using a triple mixed solvent of the fatty acid methyl ester (b1), the fatty acid amide (b2), and the aromatic hydrocarbon solvent (b3).

Preferred embodiments of the solvent components (b1), (b2), and (b3) in the agrochemical emulsifiable composition of the present invention are as follows.

The fatty acid methyl ester (b1) is preferably used in an amount of 5% to 80% by mass, more preferably 5% to 75% by mass, and even more preferably 5% to 65% by mass, with respect to the total mass of the agrochemical emulsifiable composition. A more preferred embodiment of the fatty acid methyl ester (b1) is to be used as a mixed solvent with the fatty acid amide (b2) and/or the aromatic hydrocarbon solvent (b3), and in this case, it is preferable to use 15% to 70% by mass of the fatty acid methyl ester (b1) and 10% to 80% by mass of the other (b2) and/or (b3). An even more preferred embodiment of the fatty acid methyl ester (b1) is to be used as a mixed solvent with the fatty acid amide (b2), and in that case, it is preferable to use 15% to 70% by mass of the fatty acid methyl ester (b1) and 15% to 70% by mass of the other (b2) .

The fatty acid amide (b2) is preferably used in an amount of 10% to 80% by mass, more preferably 15% to 70% by mass, and even more preferably 15% to 65% by mass, with respect to the total mass of the agrochemical emulsifiable composition. A more preferred embodiment of the fatty acid amide (b2) is to be used as a mixed solvent with the fatty acid methyl ester (b1) and/or the aromatic hydrocarbon solvent (b3), and in that case, it is preferable to use 15% to 70% by mass of the fatty acid amide (b2) and 10% to 80% by mass of the other (b1) and/or (b3).

The aromatic hydrocarbon solvent (b3) is preferably used in an amount of 10% to 95% by mass, more preferably 15% to 90% by mass, and even more preferably 25% to 85% by mass, with respect to the total mass of the agrochemical emulsifiable composition.

When the agrochemical active ingredient (A) is an agrochemical active ingredient having a LogPow of 4.0 or more, which is other than flometoquin, an embodiment in which the solvent (B) is a fatty acid methyl ester (b1) and/or a fatty acid amide (b2) is preferable, and the aromatic hydrocarbon solvent (b3) may be applied as an optional component.

In this case, the fatty acid methyl ester (b1) or the fatty acid amide (b2) is preferably used in an amount of 5% to 80% by mass, more preferably 5% to 70% by mass, and even more preferably 5% to 60% by mass, with respect to the total mass of the agrochemical emulsifiable composition. It is preferable to use the fatty acid methyl ester (b1) as a mixed solvent with the fatty acid amide (b2). In that case, it is preferable to use 10% to 70% by mass of the fatty acid methyl ester (b1) and 10% to 70% by mass of the fatty acid amide (b2).

The emulsifier (C) included in the agrochemical emulsifiable composition of the present invention includes an emulsifier combination of an anionic surfactant (c1) and a nonionic surfactant (c2).

Examples of the anionic surfactant (c1) include alkylarylsulfonic acid salts such as alkylbenzenesulfonic acid salts, dialkyl sulfosuccinic acid salts such as dioctyl sulfosuccinic acid salts, salts of polyoxyalkylene (poly)arylphenyl ether sulfuric acid esters such as polyoxyethylene distyryl phenyl ether sulfuric acid ester, salts of polyoxyalkylene (poly)arylphenyl ether phosphoric acid esters such as polyoxyethylene tristyryl phenyl ether phosphoric acid esters, salts of polyoxyalkylene alkyl aryl phosphoric acid esters such as polyoxyethylene alkylaryl phosphoric acid esters, and salts of polyoxyalkylene alkyl phosphoric acid esters such as polyoxyethylene alkyl phosphoric acid esters. These may be used singly or as a mixture.

Preferred examples include alkylarylsulfonic acid salts, and more preferred examples include dodecyl (linear) benzenesulfonic acid salts and alkyl (C11 to C13 branched) benzenesulfonic acid salts.

Examples of the cationic component in the sulfonic acid salts, sulfuric acid ester salts, and phosphoric acid ester salts of the anionic surfactant (c1) include sodium salts, calcium salts, ammonium salts, and isopropylamine salts.

As the alkylbenzenesulfonic acid salts, commercially available products may be used, and examples thereof include calcium branched alkyl (C11 to C13) benzenesulfonate (NINATE 401-A (trade name), Stepan), isopropylamine branched alkyl (C9 to C17) benzenesulfonate (NINATE 411 (trade name), Stepan), calcium linear dodecylbenzenesulfonate (NINATE 50H (trade name), Stepan), calcium linear dodecylbenzenesulfonate (NINATE 50H-M (trade name), Stepan), calcium linear dodecylbenzenesulfonate (NINAET 50H-ME (trade name), Stepan), calcium linear dodecylbenzenesulfonate (NINATE 60E (trade name), Stepan), calcium linear dodecylbenzenesulfonate (NINATE 60L (trade name), Stepan), and calcium linear dodecylbenzenesulfonate (NINATE 70B (trade name), Stepan).

Examples of the dioctyl sulfosuccinate include NEW CALGEN EP-60P (TAKEMOTO OIL & FAT CO., LTD.).

Examples of the polyoxyethylene distyryl phenyl ether sulfuric acid include trade name SORPOL 7556 (TOHO Chemical Industry Co., Ltd.).

Examples of the nonionic surfactant (c2) include polyoxyalkylene castor oil such as polyoxyethylene castor oil; polyoxyalkylene hydrogenated castor oil such as polyoxyethylene hydrogenated castor oil; polyoxyalkylene alkyl ethers such as polyoxyethylene alkyl ethers; polyoxyethylene polyoxypropylene block copolymer-type surfactants such as a polyoxyethylene polyoxypropylene block copolymer; polyoxyalkylene (poly)aryl phenyl ethers such as polyoxyethylene tristyryl phenyl ether and polyoxyethylene distyryl phenyl ether; formaldehyde condensate of polyoxyalkylene (poly)aryl phenyl ethers such as formaldehyde condensate of polyoxyethylene distyryl phenyl ether; polyoxyalkylene fatty acid esters such as polyoxyethylene fatty acid ester; polyoxyalkylene sugar fatty acid esters such as polyoxyethylene sorbitan fatty acid ester; polyoxyalkylene (poly)aryl aryl phosphoric acid esters such as polyoxyethylene tristyryl phenyl phosphate diester; (poly)glycerin fatty acid esters such as glycerin fatty acid ester and polyglycerin fatty acid ester; and sugar fatty acid esters such as sucrose fatty acid ester and sorbitan fatty acid ester.

Preferred examples of the nonionic surfactant (c2) include polyoxyalkylene castor oil, polyoxyalkylene alkyl ether, polyoxyalkylene (poly)aryl phenyl ether, formaldehyde condensate of polyoxyalkylene (poly)aryl phenyl ether, and polyoxyalkylene sugar fatty acid ester.

More preferred examples of the nonionic surfactant (c2) include polyoxyethylene castor oil, polyoxyethylene alkyl ether, polyoxyalkylene (poly)styryl phenyl ether, formaldehyde condensate of polyoxyethylene polyaryl phenyl ether, and polyoxyethylene sorbitan fatty acid ester. These may be used singly or as a mixture.

Regarding the nonionic surfactant (c2), it is preferable to apply one having an HLB value of 5 to 20, and more preferably one having an HLB value of 6 to 17. A preferred HLB value of the polyoxyalkylene castor oil, polyoxyalkylene alkyl ether, polyoxyalkylene (poly)aryl phenyl ether, or formaldehyde condensate of polyoxyalkylene (poly)aryl phenyl ether is 6 to 15, and more preferably 6 to 11.

A preferred HLB value of the polyoxyalkylene sugar fatty acid ester is 10 to 20, and more preferably 11 to 17.

As the nonionic surfactant (c2), a commercially available product may be used.

Examples of the polyoxyalkylene (poly)aryl phenyl ether include polyoxyethylene polyoxypropylene aryl phenyl ether (NEW CALGEN CP-50 (trade name), TAKEMOTO OIL & FAT CO., LTD.), polyoxyethylene polyoxypropylene aryl phenyl ether (NEW CALGEN CP-120 (trade name), TAKEMOTO OIL & FAT CO., LTD.), polyoxyethylene (9) tristyryl phenyl ether (SORPOL T-10 (trade name), TOHO Chemical Industry Co., Ltd.), polyoxyethylene (14) tristyryl phenyl ether (SORPOL T-15 (trade name), TOHO Chemical Industry Co., Ltd.), polyoxyethylene (19) tristyryl phenyl ether (SORPOL T-20 (trade name), TOHO Chemical Industry Co., Ltd.), polyoxyethylene aryl phenyl ether (NEW CALGEN C-120 (trade name), TAKEMOTO OIL & FAT CO., LTD.), polyoxyethylene aryl phenyl ether (NEW CALGEN C-150 (trade name), TAKEMOTO OIL & FAT CO., LTD.), polyoxyethylene aryl phenyl ether (NEW CALGEN C-173 (trade name), TAKEMOTO OIL & FAT CO., LTD.), polyoxyethylene polystyryl phenyl ether (PYONINE D-6112 (trade name), TAKEMOTO OIL & FAT CO., LTD.), polyoxyethylene polystyryl phenyl ether (PYONINE D-6115 (trade name), TAKEMOTO OIL & FAT CO., LTD.), polyoxyethylene polystyryl phenyl ether (PYONINE D-6120 (trade name), TAKEMOTO OIL & FAT CO., LTD.), polyoxyethylene polystyryl phenyl ether (PYONINE D-6512 (trade name), TAKEMOTO OIL & FAT CO., LTD.), polyoxyethylene polystyryl phenyl ether (PYONINE D-6413 (trade name), TAKEMOTO OIL & FAT CO., LTD.), polyoxyethylene polystyryl phenyl ether (DTD-51 (trade name), TAKEMOTO OIL & FAT CO., LTD.), and polyoxyethylene cumyl phenyl ether (TAKESURF D-7010 (trade name), TAKEMOTO OIL & FAT CO., LTD.).

Examples of the formaldehyde condensate of polyoxyalkylene (poly)aryl phenyl ether include formaldehyde condensate of polyoxyethylene (21) distyryl phenyl ether (SORPOL F-15 (trade name), TOHO Chemical Industry Co., Ltd.), formaldehyde condensate of polyoxyethylene (26) distyryl phenyl ether (SORPOL F-19 (trade name), TOHO Chemical Industry Co., Ltd.), formaldehyde condensate of polyoxyethylene (34) distyryl phenyl ether (SORPOL F-24 (trade name), TOHO Chemical Industry Co., Ltd.), formaldehyde condensate of polyoxyethylene polystyryl phenyl ether (PYONINE D-6310 (trade name), TAKEMOTO OIL & FAT CO., LTD.), and formaldehyde condensate of polyoxyethylene polystyryl phenyl ether (PYONINE D-6320 (trade name), TAKEMOTO OIL & FAT CO., LTD.).

Examples of the polyoxyalkylene castor oil include polyoxyethylenated castor oil (PYONINE D-212 (trade name), TAKEMOTO OIL & FAT CO., LTD.), polyoxyethylenated castor oil (PYONINE D-220 (trade name), TAKEMOTO OIL & FAT CO., LTD.), polyoxyethylenated castor oil (PYONINE D-225 (trade name), TAKEMOTO OIL & FAT CO., LTD.), polyoxyethylenated castor oil (PYONINE D-230 (trade name), TAKEMOTO OIL & FAT CO., LTD.), polyoxyethylenated castor oil (NEW CALGEN D-220 (trade name), TAKEMOTO OIL & FAT CO., LTD.), polyoxyethylenated (15) castor oil (SORPOL CA-15 (trade name), TOHO Chemical Industry Co., Ltd.), polyoxyethylenated (20) castor oil (SORPOL CA-20 (trade name), TOHO Chemical Industry Co., Ltd.), polyoxyethylenated (30) castor oil (SORPOL CA-30 (trade name), TOHO Chemical Industry Co., Ltd.), polyoxyethylenated (42) castor oil (SORPOL CA-42 (trade name), TOHO Chemical Industry Co., Ltd.), and polyoxyethylenated (50) castor oil (SORPOL CA-50 (trade name), TOHO Chemical Industry Co., Ltd.).

Examples of the polyoxyalkylene sugar fatty acid ester include polyoxyethylene sorbitan lauric acid ester (SORBON T-20 (trade name), TOHO Chemical Industry Co., Ltd.), polyoxyethylene sorbitan palmitic acid ester (SORBON T-40 (trade name), TOHO Chemical Industry Co., Ltd.), polyoxyethylene sorbitan stearic acid ester (SORBON T-60 (trade name), TOHO Chemical Industry Co., Ltd.), polyoxyethylene sorbitan oleic acid ester (SORBON T-80 (trade name), TOHO Chemical Industry Co., Ltd.), polyoxyethylene sorbitan lauric acid ester (NEW CALGEN D-941 (trade name), TAKEMOTO OIL & FAT CO., LTD.), polyoxyethylene sorbitan oleic acid ester (NEW CALGEN D-945 (trade name), TAKEMOTO OIL & FAT CO., LTD.), polyoxyethylene sorbitan oleic acid ester (NEW CALGEN D-945E (trade name), TAKEMOTO OIL & FAT CO., LTD.), polyoxyethylene sorbitan oleic acid ester (NEW CALGEN D-945T (trade name), TAKEMOTO OIL & FAT CO., LTD.), polyoxyethylene sorbitan lauric acid ester (PYONINE D-941 (trade name), TAKEMOTO OIL & FAT CO., LTD.), polyoxyethylene sorbitan monooleic acid ester (PYONINE D-945 (trade name), TAKEMOTO OIL & FAT CO., LTD.), and polyoxyethylene sorbitan trioleic acid ester (PYONINE D-945-T (trade name), TAKEMOTO OIL & FAT CO., LTD.).

As the emulsifier (C), a commercially available mixed product of the anionic surfactant (c1) and the nonionic surfactant (c2) may be used. Examples thereof include a mixture of polyoxyethylene-tristyryl phenyl ether, formaldehyde condensate of polyoxyethylene distyryl phenyl ether, and a dodecylbenzenesulfonic acid salt (SORPOL 3005X (trade name), TOHO Chemical Industry Co., Ltd.), a mixture of polyoxyethylene tristyryl phenyl ether, formaldehyde condensate of polyoxyethylene distyryl phenyl ether, and a dodecylbenzenesulfonic acid salt (SORPOL 3005XH (trade name), TOHO Chemical Industry Co., Ltd.), a mixture of polyoxyethylene tristyryl phenyl ether, formaldehyde condensate of polyoxyethylene distyryl phenyl ether, and a dodecylbenzenesulfonic acid salt (SORPOL 3005XL (trade name), TOHO Chemical Industry Co., Ltd.), a mixture of formaldehyde condensate of polyoxyethylene distyryl phenyl ether and a dodecylbenzenesulfonic acid salt (SORPOL 3080 (trade name), TOHO Chemical Industry Co., Ltd.), a mixture of polyoxyethylene tristyryl phenyl ether and a dodecylbenzenesulfonic acid salt (SORPOL 355 (trade name), TOHO Chemical Industry Co., Ltd.), a mixture of polyoxyethylene tristyryl phenyl ether and a dodecylbenzenesulfonic acid salt (SORPOL 355H (trade name), TOHO Chemical Industry Co., Ltd.), a mixture of polyoxyethylene tristyryl phenyl ether and a dodecylbenzenesulfonic acid salt (SORPOL 355L (trade name), TOHO Chemical Industry Co., Ltd.), a mixture of polyoxyethylene tristyryl phenyl ether, formaldehyde condensate of polyoxyethylene distyryl phenyl ether, and a dodecylbenzenesulfonic acid salt (SORPOL SM-100PW (trade name), TOHO Chemical Industry Co., Ltd.), a mixture of polyoxyalkylene aryl phenyl ether, an alkylbenzenesulfonic acid salt, and fatty acid ester solvent (22106TX (trade name), TAKEMOTO OIL & FAT CO., LTD.), a mixture of polyoxyethylene castor oil, polyoxyethylene sorbitol fatty acid ester, polyoxyethylene alkyl ether, and a dodecylbenzenesulfonic acid salt (SORPOL 4326H (trade name), TOHO Chemical Industry Co., Ltd.), and a mixture of polyoxyethylene castor oil, polyoxyethylene alkyl ether, and a dodecylbenzenesulfonic acid salt (SORPOL 4326L (trade name), TOHO Chemical Industry Co., Ltd.).

The content of the emulsifier (C) is preferably 1% to 30% by mass, and more preferably 5% to 25% by mass, with respect to the total mass of the agrochemical emulsifiable composition.

The content of the anionic surfactant (c1) is preferably 0.5% to 10% by mass, and more preferably 0.5% to 8% by mass, with respect to the total mass of the agrochemical emulsifiable composition.

The content of the nonionic surfactant (c2) is preferably 5% to 25% by mass, and more preferably 6% to 20% by mass, with respect to the total mass of the agrochemical emulsifiable composition.

The agrochemical emulsifiable composition of the present invention may optionally contain other additives and the like in addition to the agrochemical active ingredient (A), the solvent (B), and the emulsifier (C).

As the other additives, any solvent may be used, and examples thereof include polar solvents such as cyclohexanone and methanol; paraffinic hydrocarbon solvents such as decane, undecane, dodecane, tridecane, tetradecane, pentadecane, hexadecane, heptadecane, octadecane, nonadecane, icosane, squalane, and mixtures thereof; and naphthenic hydrocarbon solvents, such as cyclopentane and cyclohexane, containing at least one saturated ring in one molecule.

As the solvent, a fatty acid ester other than the fatty acid methyl ester (b1) may be used, or a (C2-C10) alkyl ester of a saturated or unsaturated (C6-C30) fatty acid may be used. Examples thereof include butyl esters and octyl esters of saturated or unsaturated fatty acids having 6 to 30 carbon atoms. For example, commercially available products such as n-butyl rapeseed fatty acid (TOENOL #4115 (trade name), Toei Chemical), i-butyl rapeseed fatty acid (TOENOL #4100 I (trade name), Toei Chemical), octyl palmitate (TOENOL #5001 (trade name), Toei Chemical), octyl palmitate (TOENOL #5016 (trade name), Toei Chemical), octyl palmitate (TOENOL #5168 (trade name), Toei Chemical), and 2-ethylhexyl rapeseed fatty acid (TOENOL #5090 (trade name), Toei Chemical) may be used.

Examples of the other additives include stabilizers such as epoxidized vegetable oils; anti-freezing agents such as propylene glycol; antiseptic agents such as 1,2-benzisothiazol-3(2H)-one; amphoteric surfactants such as lauric acid amidopropyl betaine and coconut oil fatty acid amidopropyl betaine; and cationic surfactants such as lauryltrimethylammonium chloride and benzalkonium chloride solution.

The agrochemical emulsifiable composition of the present invention is a solution formulation in which the agrochemical active ingredient (A) is completely dissolved in the solvent (B), and an emulsifiable concentrate is preferable as the formulation form. Water may be added to a solution-like agrochemical emulsifiable composition containing the agrochemical active ingredient (A), the solvent (B), and the emulsifier (C), and the mixture may be finely divided to a desired emulsified particle size with a homogenizer or the like to form an emulsion oil in water formulation.

The agrochemical emulsifiable composition of the present invention can be prepared, for example, by adding optional additives to the agrochemical active ingredient (A), the solvent (B), and the emulsifier (C), heating them as necessary, and stirring them until the mixture becomes uniform. Furthermore, a filtration step may be added as necessary. The agrochemical emulsifiable composition can be produced through such steps.

The agrochemical emulsifiable composition of the present invention is usually diluted 10 to 5000 times with water and emulsified, and the dilution is sprayed to a place where pests harmful to crops are generated and to a place where pests are likely to be generated, to thereby control agricultural pests. The water used at that time may be generally hard water or soft water, and an auxiliary agent such as a spreading agent may be added as necessary.

### Examples

Hereinafter, the present invention will be described in more detail with reference to Examples and Comparative Examples.

### Example 1a

5.2 parts by mass of flometoquin raw material (LogPow 5.41, purity 98.5%), 39.8 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether, formaldehyde condensate of polyoxyethylene distyryl phenyl ether, and a dodecylbenzenesulfonic acid salt (SORPOL SM-100PW (trade name), TOHO Chemical Industry Co., Ltd.) were mixed, and a flometoquin emulsifiable composition was prepared.

### Example 2a

A flometoquin emulsifiable composition was obtained in the same manner as in Example 1a, except that 15 parts by mass of SORPOL SM-100PW was changed to 0 parts by mass, and 13 parts by mass of polyoxyethylene sorbitan oleic acid ester (NEW CALGEN D-945 (trade name), HLB15, TAKEMOTO OIL & FAT CO., LTD.) and 2 parts by mass of an alkyl (branched C11 to C13) benzenesulfonic acid salt (NINATE 401-A (trade name), Stepan) were added.

### Example 3a

A flometoquin emulsifiable composition was obtained in the same manner as in Example 1a, except that 15 parts by mass of SORPOL SM-100PW was changed to 0 parts by mass, and 13 parts by mass of polyoxyalkylene aryl phenyl ether (NEW CALGEN CP-50 (trade name), HLB11.1, TAKEMOTO OIL & FAT CO., LTD.) and 2 parts by mass of an alkyl (branched C11 to C13) benzenesulfonic acid salt (NINATE 401-A (trade name), Stepan) were added.

### Example 4a

A flometoquin emulsifiable composition was obtained in the same manner as in Example 1a, except that 15 parts by mass of SORPOL SM-100PW was changed to 0 parts by mass, and 5 parts by mass of polyoxyethylene castor oil (NEW CALGEN D-220 (trade name), TAKEMOTO OIL & FAT CO., LTD.), 8 parts by mass of polyoxyethylene sorbitan oleic acid ester (NEW CALGEN D-945 (trade name), HLB15, TAKEMOTO OIL & FAT CO., LTD.), and 2 parts by mass of an alkyl (branched C11 to C13) benzenesulfonic acid salt (NINATE 401-A (trade name), Stepan) were added.

### Example 5a

A flometoquin emulsifiable composition was obtained in the same manner as in Example 1a, except that 15 parts by mass of SORPOL SM-100PW was changed to 0 parts by mass, and 5 parts by mass of polyoxyethylene castor oil (NEW CALGEN D-220 (trade name), TAKEMOTO OIL & FAT CO., LTD.), 8 parts by mass of polyoxyethylene sorbitan lauric acid ester (NEW CALGEN D-941 (trade name), HLB16.7, TAKEMOTO OIL & FAT CO., LTD.), and 2 parts by mass of an alkyl (branched C11 to C13) benzenesulfonic acid salt (NINATE 401-A (trade name), Stepan) were added.

### Example 6a

A flometoquin emulsifiable composition was obtained in the same manner as in Example 1a, except that 39.8 parts by mass of N,N-dimethyldecanamide was changed to 9.8 parts by mass, and 40 parts by mass of methyl coconut fatty acid was changed to 70 parts by mass.

### Example 7a

A flometoquin emulsifiable composition was obtained in the same manner as in Example 1a, except that 39.8 parts by mass of N,N-dimethyldecanamide was changed to 19.8 parts by mass, and 40 parts by mass of methyl coconut fatty acid was changed to 60 parts by mass.

### Example 8a

A flometoquin emulsifiable composition was obtained in the same manner as in Example 1a, except that 39.8 parts by mass of N,N-dimethyldecanamide was changed to 29.8 parts by mass, and 40 parts by mass of methyl coconut fatty acid was changed to 50 parts by mass.

### Example 9a

A flometoquin emulsifiable composition was obtained in the same manner as in Example 1a, except that 39.8 parts by mass of N,N-dimethyldecanamide was changed to 59.8 parts by mass, and 40 parts by mass of methyl coconut fatty acid was changed to 20 parts by mass.

### Example 10a

A flometoquin emulsifiable composition was obtained in the same manner as in Example 1a, except that 39.8 parts by mass of N,N-dimethyldecanamide was changed to 69.8 parts by mass, and 40 parts by mass of methyl coconut fatty acid was changed to 10 parts by mass.

### Example 11a

A flometoquin emulsifiable composition was obtained in the same manner as in Example 1a, except that 39.8 parts by mass of N,N-dimethyldecanamide was changed to 79.8 parts by mass, and 40 parts by mass of methyl coconut fatty acid was changed to 0 parts by mass.

### Example 12a

A flometoquin emulsifiable composition was obtained in the same manner as in Example 1a, except that 39.8 parts by mass of N,N-dimethyldecanamide was changed to 39.8 parts by mass of a mixture of N,N-dimethyloctanamide and N,N-dimethyldecanamide (Hallcomid M-8-10 (trade name), Stepan).

### Example 13a

A flometoquin emulsifiable composition was obtained in the same manner as in Example 1a, except that 39.8 parts by mass of N,N-dimethyldecanamide was changed to 39.8 parts by mass of a mixture of N,N-dimethyldodecanamide and N,N-dimethyltetradecanamide (Hallcomid M-12-14 (trade name), Stepan).

### Example 14a

A flometoquin emulsifiable composition was obtained in the same manner as in Example 1a, except that 40 parts by mass of methyl coconut fatty acid was changed to 40 parts by mass of methyl laurate (EXCEPARL ML-85 (trade name), Kao).

### Example 15a

A flometoquin emulsifiable composition was obtained in the same manner as in Example 1a, except that 40 parts by mass of methyl coconut fatty acid was changed to 40 parts by mass of a mixture of methyl caprylate and methyl caprate (Stepan C-25 (trade name), Stepan).

### Example 16a

A flometoquin emulsifiable composition was obtained in the same manner as in Example 1a, except that 40 parts by mass of methyl coconut fatty acid was changed to 40 parts by mass of a mixture of methyl laurate and methyl palmitate (Stepan C-42 (trade name), Stepan).

### Example 17a

A flometoquin emulsifiable composition was obtained in the same manner as in Example 1a, except that 40 parts by mass of methyl coconut fatty acid was changed to 40 parts by mass of methyl caprylate (TOENOL #2008-95 (trade name), Toei Chemical).

### Example 18a

A flometoquin emulsifiable composition was obtained in the same manner as in Example 1a, except that 40 parts by mass of methyl coconut fatty acid was changed to 40 parts by mass of methyl caprate (TOENOL #2010-95 (trade name), Toei Chemical).

### Example 19a

A flometoquin emulsifiable composition was obtained in the same manner as in Example 1a, except that 40 parts by mass of methyl coconut fatty acid was changed to 40 parts by mass of methyl erucate (TOENOL #2220-90 (trade name), Toei Chemical).

### Example 20a

A flometoquin emulsifiable composition was obtained in the same manner as in Example 1a, except that 40 parts by mass of methyl coconut fatty acid was changed to 40 parts by mass of methyl rapeseed fatty acid (TOENOL #3120 (trade name), Toei Chemical).

### Example 21a

A flometoquin emulsifiable composition was obtained in the same manner as in Example 1a, except that 40 parts by mass of methyl coconut fatty acid was changed to 40 parts by mass of methyl myristate (TOENOL #2014-95 (trade name), Toei Chemical).

### Example 22a

A flometoquin emulsifiable composition was obtained in the same manner as in Example 1a, except that 40 parts by mass of methyl coconut fatty acid was changed to 40 parts by mass of methyl palmitate (TOENOL #5016 (trade name), Toei Chemical).

### Example 23a

A flometoquin emulsifiable composition was obtained in the same manner as in Example 1a, except that 40 parts by mass of methyl coconut fatty acid was changed to 40 parts by mass of methyl oleate (FUJIFILM Wako Pure Chemical Corporation).

### Example 24a

5.2 parts by mass of a flometoquin raw material (purity 98.5%), 79.8 parts by mass of an aromatic hydrocarbon solvent (SWASOL 1500 (trade name), Maruzen Petrochemical), 10 parts by mass of a mixture of a polyoxyalkylene aryl phenyl ether, an alkylbenzenesulfonic acid metal salt, and an aromatic solvent (AGROSURF EC-5200 (trade name), TAKEMOTO OIL & FAT CO., LTD.), and 5 parts by mass of a mixture of a polyoxyalkylene aryl phenyl ether, an alkylbenzenesulfonic acid metal salt, and an aromatic solvent (AGROSURF EC-5300 (trade name), TAKEMOTO OIL & FAT CO., LTD.) were mixed, and a flometoquin emulsifiable composition was prepared.

### Example 25a

A flometoquin emulsifiable composition was obtained in the same manner as in Example 24a, except that 79.8 parts by mass of the aromatic hydrocarbon solvent was changed to 40 parts by mass, and 39.8 parts by mass of N,N-dimethyldecanamide (Rhodiasolv ADMA10 (trade name), Solvay) was added.

### Example 26a

A flometoquin emulsifiable composition was obtained in the same manner as in Example 24a, except that 79.8 parts by mass of the aromatic hydrocarbon solvent was changed to 40 parts by mass, and 39.8 parts by mass of methyl coconut fatty acid (EXCEPARL MC (trade name), Kao) was added.

### Example 27a

A flometoquin emulsifiable composition was obtained in the same manner as in Example 1a, except that 39.8 parts by mass of N,N-dimethyldecanamide was changed to 39.8 parts by mass of N,N-dimethyl 9-decenamide (Hallcomid 1025 (trade name), Stepan).

### Example 28a

A flometoquin emulsifiable composition was obtained in the same manner as in Example 1a, except that 39.8 parts by mass of N,N-dimethyldecanamide was changed to 39.8 parts by mass of N,N-dimethyl 9-dodecenamide (Hallcomid 1225 (trade name), Stepan).

### Example 29a

A flometoquin emulsifiable composition was obtained in the same manner as in Example 1a, except that 15 parts by mass of SORPOL SM-100PW was changed to 0 parts by mass, and 10 parts by mass of a polyoxyethylene sorbitan oleic acid ester (SORBON T-80 (trade name), TOHO Chemical Industry Co., Ltd.) and 5 parts by mass of a mixture of a polyoxyalkylene aryl phenyl ether, an alkylbenzenesulfonic acid salt, and a fatty acid ester solvent (22106TX, TAKEMOTO OIL & FAT CO., LTD.) were added.

### Example 30a

A flometoquin emulsifiable composition was obtained in the same manner as in Example 1a, except that 15 parts by mass of SORPOL SM-100PW was changed to 0 parts by mass, and 15 parts by mass of a mixture of a polyoxyethylene alkyl ether, a polyoxyethylene sorbitol fatty acid ester, polyoxyethylene castor oil, and an alkylbenzenesulfonic acid salt (SORPOL 4326H (trade name), TOHO Chemical Industry Co., Ltd.) was added.

### Example 31a

A flometoquin emulsifiable composition was obtained in the same manner as in Example 1a, except that 15 parts by mass of SORPOL SM-100PW was changed to 0 parts by mass, and 10 parts by mass of a polyoxyethylene sorbitan oleic acid ester (SORBON T-80 (trade name), TOHO Chemical Industry Co., Ltd.) and 5 parts by mass of a mixture of a polyoxyethylene alkyl ether, polyoxyethylene castor oil, and an alkylbenzenesulfonic acid salt (SORPOL 4326L (trade name), TOHO Chemical Industry Co., Ltd.) were added.

### Example 32a

A flometoquin emulsifiable composition was obtained in the same manner as in Example 1a, except that 39.8 parts by mass of N,N-dimethyldecanamide was changed to 42.3 parts by mass, 40 parts by mass of methyl coconut fatty acid was changed to 42.5 parts by mass, 15 parts by mass of SORPOL SM-100PW was changed to 0 parts by mass, and 7.5 parts by mass of a polyoxyethylene sorbitan oleic acid ester (SORBON T-80 (trade name), TOHO Chemical Industry Co., Ltd.) and 2.5 parts by mass of a mixture of a polyoxyethylene alkyl ether, polyoxyethylene castor oil, and an alkylbenzenesulfonic acid salt (SORPOL 4326L (trade name), TOHO Chemical Industry Co., Ltd.) were added.

### Example 33a

A flometoquin emulsifiable composition was obtained in the same manner as in Example 1a, except that 39.8 parts by mass of N,N-dimethyldecanamide was changed to 42.3 parts by mass, 40 parts by mass of methyl coconut fatty acid was changed to 42.5 parts by mass, 15 parts by mass of SORPOL SM-100PW was changed to 0 parts by mass, and 7.5 parts by mass of a polyoxyethylene sorbitan oleic acid ester (SORBON T-80 (trade name), TOHO Chemical Industry Co., Ltd.) and 2.5 parts by mass of a mixture of a polyoxyalkylene aryl phenyl ether, an alkylbenzenesulfonic acid salt, and a fatty acid ester solvent (22106TX, TAKEMOTO OIL & FAT CO., LTD.) were added.

The composition of the flometoquin emulsifiable compositions prepared according to Examples 1a to 5a is shown in Table 3.

**[Table 3]**

| [Table 3: Examples 1a to 5a] | | | | | | | |
|---|---|---|---|---|---|---|---|
| Component | | | Example 1a | Example 2a | Example 3a | Example 4a | Example 5a |
| Agrochemical active ingredient (A) | | Flometoquin (LogPow = 5.41) | 5.2 | 5.2 | 5.2 | 5.2 | 5.2 |
| Solvent (B) | (b1) | Methyl coconut fatty acid | 40 | 40 | 40 | 40 | 40 |
| | (b2) | N,N-dimethyldecanamide | 39.8 | 39.8 | 39.8 | 39.8 | 39.8 |
| Emulsifier (C) | (c2) | Mixture of polyoxyethylene tristyryl phenyl ether, | 15 | - | - | - | - |
| | (c2) | formaldehyde condensate of polyoxyethylene distyryl phenyl ether, and | | | | | |
| | (c1) | dodecylbenzenesulfonic acid salt (SORPOL SM-100PW) | | | | | |
| | (c2) | Polyoxyethylene sorbitan oleic acid ester (NEW CALGEN D-945) | - | 13 | - | 8 | - |
| | (c2) | Polyoxyalkylene aryl phenyl ether | - | - | 13 | - | - |
| | (c2) | Polyoxyethylene castor oil | - | - | - | 5 | 5 |
| | (c2) | Polyoxyethylene sorbitan lauric acid ester | - | - | - | - | 8 |
| | (c1) | Alkyl (branched C11-C13) benzenesulfonic acid salt | - | 2 | 2 | 2 | 2 |
| Total parts by mass | | | 100 | 100 | 100 | 100 | 100 |

| | | | | | | | |
|---|---|---|---|---|---|---|---|
| (b1): Fatty acid methyl ester, (b2): Fatty acid amide (c1): Anionic surfactant, (c2): Nonionic surfactant | | | | | | | |

The composition of the flometoquin emulsifiable compositions prepared according to Examples 6a to 11a is shown in Table 4.

**[Table 4]**

| [Table 4: Examples 6a to 11a] | | | | | | | | |
|---|---|---|---|---|---|---|---|---|
| Component | | | Example 6a | Example 7a | Example 8a | Example 9a | Example 10a | Example 11a |
| Agrochemical active ingredient (A) | | Flometoquin | 5.2 | 5.2 | 5.2 | 5.2 | 5.2 | 5.2 |
| Solvent (B) | (b1) | Methyl coconut fatty acid | 70 | 60 | 50 | 20 | 10 | - |
| | (b2) | N,N-dimethyldecanamide | 9.8 | 19.8 | 29.8 | 59.8 | 69.8 | 79.8 |
| Emulsifier (C) | (c2) | Mixture of polyoxyethylene tristyryl phenyl ether, formaldehyde condensate of | 15 | 15 | 15 | 15 | 15 | 15 |
| | (c2) | polyoxyethylene distyryl phenyl ether, and | | | | | | |
| | (c1) | dodecylbenzenesulfonic acid salt (SORPOL SM-100PW) | | | | | | |
| Total parts by mass | | | 100 | 100 | 100 | 100 | 100 | 100 |

| | | | | | | | | |
|---|---|---|---|---|---|---|---|---|
| (b1): Fatty acid methyl ester, (b2): Fatty acid amide (c1): Anionic surfactant, (c2): Nonionic surfactant | | | | | | | | |

The composition of the flometoquin emulsifiable compositions prepared according to Examples 12a to 13a is shown in Table 5.

**[Table 5]**

| [Table 5: Examples 12a to 13a] | | | | |
|---|---|---|---|---|
| Component | | | Example 12a | Example 13a |
| Agrochemical active ingredient (A) | | Flometoquin | 5.2 | 5.2 |
| Solvent (B) | (b1) | Methyl coconut fatty acid | 40 | 40 |
| | | Mixture of | 39.8 | - |
| | (b2) | N,N-dimethyloctanamide and | | |
| | (b2) | N,N-dimethyldecanamide | | |
| | | Mixture of | - | 39.8 |
| | (b2) | N,N-dimethyldodecanamide and | | |
| | (b2) | N,N-dimethyltetradecanamide | | |
| Emulsifier (C) | | Mixture of | 15 | 15 |
| | (c2) | polyoxyethylene tristyryl phenyl ether, | | |
| | (c2) | formaldehyde condensate of polyoxyethylene distyryl phenyl ether, and | | |
| | (c1) | dodecylbenzenesulfonic acid salt (SORPOL SM-100PW) | | |
| Total parts by mass | | | 100 | 100 |

| | | | | |
|---|---|---|---|---|
| (b1): Fatty acid methyl ester, (b2): Fatty acid amide (c1): Anionic surfactant, (c2): Nonionic surfactant | | | | |

The composition of the flometoquin emulsifiable compositions prepared according to Examples 14a to 18a is shown in Table 6.

**[Table 6]**

| [Table 6: Examples 14a to 18a] | | | | | | | |
|---|---|---|---|---|---|---|---|
| Component | | | Example 14a | Example 15a | Example 16a | Example 17a | Example 18a |
| Agrochemical active ingredient (A) | | Flometoquin | 5.2 | 5.2 | 5.2 | 5.2 | 5.2 |
| | (b1) | Methyl laurate | 40 | - | - | - | - |
| | | Mixture of | - | 40 | - | - | - |
| | (b1) | methyl caprylate and | | | | | |
| | (b1) | methyl caprate | | | | | |
| Solvent (B) | | Mixture of | - | - | 40 | - | - |
| | (b1) | methyl laurate and | | | | | |
| | (b1) | methyl palmitate | | | | | |
| | (b1) | Methyl caprylate | - | - | - | 40 | - |
| | (b1) | Methyl caprate | - | - | - | - | 40 |
| | (b2) | N,N-dimethyldecanamide | 39.8 | 39.8 | 39.8 | 39.8 | 39.8 |
| Emulsifier (C) | | Mixture of | 15 | 15 | 15 | 15 | 15 |
| | (c2) | polyoxyethylene tristyryl phenyl ether, formaldehyde condensate of | | | | | |
| | (c2) | polyoxyethylene distyryl phenyl ether, and | | | | | |
| | (c1) | dodecylbenzenesulfonic acid salt (SORPOL SM-100PW) | | | | | |
| Total parts by mass | | | 100 | 100 | 100 | 100 | 100 |

| | | | | | | | |
|---|---|---|---|---|---|---|---|
| (b1): Fatty acid methyl ester, (b2): Fatty acid amide (c1): Anionic surfactant, (c2): Nonionic surfactant | | | | | | | |

The composition of the flometoquin emulsifiable compositions prepared according to Examples 19a to 23a is shown in Table 7.

**[Table 7]**

| [Table 7: Examples 19a to 23a] | | | | | | | |
|---|---|---|---|---|---|---|---|
| Component | | | Example 19a | Example 20a | Example 21a | Example 22a | Example 23a |
| Agrochemical active ingredient (A) | | Flometoquin | 5.2 | 5.2 | 5.2 | 5.2 | 5.2 |
| Solvent (B) | (b1) | Methyl erucate | 40 | - | - | - | - |
| | (b1) | Methyl rapeseed fatty acid | - | 40 | - | - | - |
| | (b1) | Methyl myristate | - | - | 40 | - | - |
| | (b1) | Methyl palmitate | - | - | - | 40 | - |
| | (b1) | Methyl oleate | - | - | - | - | 40 |
| | (b2) | N,N-dimethyldecanamide | 39.8 | 39.8 | 39.8 | 39.8 | 39.8 |
| Emulsifier (C) | | Mixture of | 15 | 15 | 15 | 15 | 15 |
| | (c2) | polyoxyethylene tristyryl phenyl ether, formaldehyde condensate of | | | | | |
| | (c2) | polyoxyethylene distyryl phenyl ether, and | | | | | |
| | (c1) | dodecylbenzenesulfonic acid salt (SORPOL SM-100PW) | | | | | |
| Total parts by mass | | | 100 | 100 | 100 | 100 | 100 |

| | | | | | | | |
|---|---|---|---|---|---|---|---|
| (b1): Fatty acid methyl ester, (b2): Fatty acid amide (c1): Anionic surfactant, (c2): Nonionic surfactant | | | | | | | |

The composition of the flometoquin emulsifiable compositions prepared according to Examples 24a to 28a is shown in Table 8.

**[Table 8]**

| [Table 8: Examples 24a to 28a] | | | | | | | |
|---|---|---|---|---|---|---|---|
| Component | | | Example 24a | Example 25a | Example 26a | Example 27a | Example 28a |
| Agrochemical active ingredient (A) | | Flometoquin | 5.2 | 5.2 | 5.2 | 5.2 | 5.2 |
| Solvent (B) | (b1) | Methyl coconut fatty acid | - | - | 39.8 | 40 | 40 |
| | (b2) | N,N-dimethyldecanamide | - | 39.8 | - | - | - |
| | (b2) | N,N-dimethyl 9-decenamide | - | - | - | 39.8 | - |
| | (b2) | N,N-dimethyl 9-dodecenamide | - | - | - | - | 39.8 |
| | (b3) | Aromatic hydrocarbon solvent (SWASOL 1500) | 79.8 | 40 | 40 | - | - |
| | | Mixture of | - | - | - | 15 | 15 |
| | (c2) | polyoxyethylene tristyryl phenyl ether, | | | | | |
| | (c2) | formaldehyde condensate of polyoxyethylene distyryl phenyl ether, and | | | | | |
| | (c1) | dodecylbenzenesulfonic acid salt (SORPOL SM-100PW) | | | | | |
| Emulsifier (C) | | Mixture of | 10 | 10 | 10 | - | - |
| | (c2) | polyoxyalkylene aryl phenyl ether, | | | | | |
| | (cI) | alkylbenzenesulfonic acid metal salt, and aromatic solvent (AGROSURF EC-5200) | | | | | |
| | | Mixture of | 5 | 5 | 5 | - | - |
| | (c2) | polyoxyalkylene aryl phenyl ether, | | | | | |
| | (c1) | alkylbenzenesulfonic acid metal salt, and aromatic solvent (AGROSURF EC-5300) | | | | | |
| Total parts by mass | | | 100 | 100 | 100 | 100 | 100 |

| | | | | | | | |
|---|---|---|---|---|---|---|---|
| (b1): Fatty acid methyl ester, (b2): Fatty acid amide, (b3): Aromatic hydrocarbon solvent (c1): Anionic surfactant, (c2): Nonionic surfactant | | | | | | | |

The composition of the flometoquin emulsifiable compositions prepared according to Examples 29a to 33a is shown in Table 9.

**[Table 9]**

| [Table 9: Examples 29a to 33a] | | | | | | | |
|---|---|---|---|---|---|---|---|
| Component | | | Example 29a | Example 30a | Example 31a | Example 32a | Example 33a |
| Agrochemical active ingredient (A) | | Flometoquin | 5.2 | 5.2 | 5.2 | 5.2 | 5.2 |
| Solvent (B) | (b1) | Methyl coconut fatty acid | 40 | 40 | 40 | 42.5 | 42.5 |
| | (b2) | N,N-dimethyldecanamide | 39.8 | 39.8 | 39.8 | 42.3 | 42.3 |
| | (c2) | Polyoxyethylene sorbitan oleic acid ester **(SORBON T-80)** | 10 | - | 10 | 7.5 | 7.5 |
| | | Mixture of | 5 | - | - | - | 2.5 |
| | (c2) | polyoxyalkylene aryl phenyl ether, | | | | | |
| | (c1) | alkylbenzenesulfonic acid salt, and fatty acid ester solvent (**22106TX)** | | | | | |
| Emulsifier (C) | | Mixture of | - | 15 | - | - | - |
| | (c2) | polyoxyethylene alkyl ether, | | | | | |
| | (c2) | polyoxyethylene sorbitan fatty acid ester, | | | | | |
| | (c1) | polyoxyethylene castor oil, and alkylbenzenesulfonic acid salt | | | | | |
| | | Mixture of | - | - | 5 | 2.5 | - |
| | (c2) | polyoxyethylene alkyl ether, | | | | | |
| | (c2) | polyoxyethylene castor oil, and | | | | | |
| | (c1) | alkylbenzenesulfonic acid salt | | | | | |
| Total parts by mass | | | 100 | 100 | 100 | 100 | 100 |

| | | | | | | | |
|---|---|---|---|---|---|---|---|
| (b1): Fatty acid methyl ester, (b2): Fatty acid amide (c1): Anionic surfactant, (c2): Nonionic surfactant | | | | | | | |

### Comparative Example 1a

5.2 parts by mass of flometoquin raw material (purity 98.5%), 39.8 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of alkyl (branched C11 to C13) benzenesulfonic acid metal salt (NINATE 401-A (trade name), Stepan) were mixed to prepare a composition according to Comparative Example 1a.

### Comparative Example 2a

A composition according to Comparative Example 2a was prepared in the same manner as in Comparative Example 1a, except that 15 parts by mass of alkyl (branched C11 to C13) benzenesulfonic acid metal salt was changed to 15 parts by mass of polyoxyethylene sorbitan oleic acid ester (NEW CALGEN D-945E (trade name), HLB11.2, TAKEMOTO OIL & FAT CO., LTD.).

### Comparative Example 3a

A composition according to Comparative Example 3a was prepared in the same manner as in Comparative Example 1a, except that 15 parts by mass of alkyl (branched C11 to C13) benzenesulfonic acid metal salt was changed to 15 parts by mass of polyoxyethylene-tristyryl phenyl ether (SORPOL T-10 (trade name), HLB10.0, TOHO Chemical Industry Co., Ltd.).

However, the composition of Comparative Example 3a did not become a homogeneous liquid.

The composition of the flometoquin emulsifiable compositions prepared according to Comparative Examples 1a to 3a is shown in Table 10.

**[Table 10]**

| [Table 10: Comparative Examples 1a to 3a] | | | | | |
|---|---|---|---|---|---|
| Component | | | Comparative Example 1a | Comparative Example 2a | Comparative Example 3a |
| Agrochemical active ingredient (A) | | Flometoquin | 5.2 | 5.2 | 5.2 |
| Solvent (B) | (b1) | Methyl coconut fatty acid | 40 | 40 | 40 |
| | (b2) | N,N-dimethyldecanamide | 39.8 | 39.8 | 39.8 |
| Emulsifier (C) | | Mixture of | - | - | - |
| | (c2) | polyoxyethylene tristyryl phenyl ether, | | | |
| | (c2) | formaldehyde condensate of polyoxyethylene distyryl phenyl ether, and | | | |
| | (c1) | dodecylbenzenesulfonic acid salt **(SORPOL SM-100PW)** | | | |
| | (c2) | Polyoxyethylene sorbitan oleic acid ester (**NEW CALGEN D-945)** | - | 15 | - |
| | (c1) | Alkyl (branched C11 to C13) benzenesulfonic acid salt | 15 | - | - |
| | (c2) | Polyoxyethylene tristyryl phenyl ether (**SORPOL T-10)** | - | - | 15 |
| Total parts by mass | | | 100 | 100 | 100 |

| | | | | | |
|---|---|---|---|---|---|
| (b1): Fatty acid methyl ester, (b2): Fatty acid amide (c1): Anionic surfactant, (c2): Nonionic surfactant | | | | | |

### Test Example 1 (Stability Test)

The chemical stability of the flometoquin emulsifiable compositions of the present invention was evaluated.

5 mL of each of the flometoquin emulsifiable compositions of Examples and Comparative Examples was placed in a glass screw tube and hermetically sealed. These were stored in a thermostatic bath at 54°C for 2 weeks. Thereafter, the flometoquin content was measured by high performance liquid chromatography, and the decomposition rate was calculated from the initial value.

The test results are summarized in Table 11.

**[Table 11]**

| [Table 11] Stability Test Results | | | |
|---|---|---|---|
| | Active ingredient content | | |
| | Initial value | After 2 weeks at 54°C | Degradation rate |
| Example 1a | 5.17% | 4.92% | 4.84% |
| Example 3a | 5.31% | 4.99% | 6.03% |
| Example 6a | 5.18% | 5.12% | 1.16% |
| Example 7a | 5.15% | 4.99% | 3.11% |
| Example 8a | 5.12% | 4.95% | 3.32% |
| Example 12a | 5.09% | 4.78% | 6.09% |
| Example 13a | 5.19% | 4.89% | 5.78% |
| Example 14a | 5.20% | 5.08% | 2.31% |
| Example 15a | 5.20% | 5.18% | 0.38% |
| Example 16a | 5.25% | 5.09% | 3.05% |
| Example 17a | 5.16% | 5.19% | 0.00% |
| Example 18a | 5.28% | 5.16% | 2.27% |
| Example 19a | 5.10% | 4.92% | 3.53% |
| Example 20a | 5.16% | 4.80% | 6.98% |
| Example 21a | 5.20% | 5.02% | 3.46% |
| Example 22a | 5.19% | 5.00% | 3.66% |
| Example 23a | 5.20% | 4.94% | 5.00% |
| Example 25a | 5.10% | 5.00% | 1.96% |
| Example 26a | 5.14% | 4.91% | 4.47% |
| Example 29a | 5.11% | 4.98% | 2.54% |
| Example 30a | 5.16% | 4.93% | 4.46% |
| Example 31a | 5.08% | 4.92% | 3.14% |
| Comparative Example 1a | 5.31% | 4.31% | 18.90% |

The expiration date of an agrochemical formulation is usually considered to be 2 years or more, and the accelerated stability test at 54°C for 2 weeks is an evaluation method that guarantees chemical stability at room temperature for 2 years for an agrochemical formulation.

As a result of the stability test of Test Example 1, in the flometoquin emulsifiable compositions of Examples, degradation of flometoquin was suppressed to a low level even after storage at 54°C for 2 weeks. On the other hand, the compositions of Comparative Examples had degradation rates of about 10% to 19% and high degradability after storage at 54°C for 2 weeks. From the results of Test Example 1, it was found that the flometoquin emulsifiable compositions of Examples have sufficient storage stability as agrochemical formulations.

### Test Example 2 (Emulsifiability Test)

The emulsifiability of the flometoquin emulsifiable compositions of the present invention was evaluated.

15-mL glass test tubes each containing 15 mL of water were prepared. 15 µL of each of the flometoquin emulsifiable compositions of Examples and Comparative Examples was added to the test tube so as to be equivalent to a 1000-fold dilution, the mixture was shaken 10 times, and the initial emulsified state was checked (initial evaluation). Thereafter, the mixture was allowed to stand for 30 minutes, and the emulsified state was checked again (evaluation after 30 minutes). The criteria for initial evaluation and evaluation after 30 minutes are as follows.

The test results are summarized in Table 12.

Evaluation criteria for initial value emulsified state
∘: A uniform emulsified state is formed.
△: An emulsified state is formed; however, the particles are present in a coarse state.
×: An emulsified state is not formed.

Evaluation criteria for emulsified state after 30 minutes
∘: A uniform emulsified state is maintained.
△: Slightly agglomerated emulsified particles are observed; however, an almost uniform emulsified state is maintained.
×: Separation or creaming occurs, and the emulsified state may not be maintained.

**[Table 12]**

| [Table 12] Emulsifiability Test Results | | |
|---|---|---|
| | Emulsifiability evaluation results | |
| | Initial value | After 30 minutes |
| Example 1a | ○ | ○ |
| Example 2a | ○ | ○ |
| Example 3a | ○ | ○ |
| Example 4a | ○ | ○ |
| Example 5a | ○ | ○ |
| Example 6a | ○ | ○ |
| Example 7a | ○ | ○ |
| Example 8a | ○ | ○ |
| Example 9a | ○ | △ |
| Example 10a | ○ | △ |
| Example 11a | ○ | ○ |
| Example 12a | ○ | ○ |
| Example 13a | ○ | ○ |
| Example 14a | ○ | △ |
| Example 15a | ○ | △ |
| Example 16a | ○ | ○ |
| Example 17a | ○ | ○ |
| Example 18a | ○ | △ |
| Example 19a | ○ | ○ |
| Example 20a | ○ | ○ |
| Example 21a | ○ | △ |
| Example 22a | ○ | ○ |
| Example 23a | ○ | ○ |
| Example 24a | ○ | ○ |
| Example 25a | ○ | ○ |
| Example 26a | ○ | ○ |
| Example 27a | ○ | ○ |
| Example 28a | ○ | ○ |
| Example 29a | ○ | ○ |
| Example 30a | ○ | ○ |
| Example 31a | ○ | ○ |
| Example 32a | ○ | ○ |
| Example 33a | ○ | ○ |
| Comparative Example 1a | △ | × |
| Comparative Example 2a | △ | × |

The flometoquin emulsifiable compositions of Examples formed a uniform emulsified state by simple shaking, and could maintain the uniform emulsified state for a long time. On the other hand, the compositions of Comparative Examples formed an emulsified state immediately after shaking; however, coarse particles were observed, and the occurrence of creaming and separation was observed after standing, and a stable emulsified dispersion could not be prepared.

An agrochemical emulsifiable concentrate is usually diluted with water to form an emulsified state and then sprayed, and it may take time to spray the agrochemical emulsifiable concentrate. Therefore, a uniform emulsified state may not be formed, and when creaming or the like occurs, the state of chemical spraying to the crop is not uniform, which may lead to a decrease in effect and occurrence of phytotoxicity. It was shown that the flometoquin emulsifiable compositions of Examples may form a uniform emulsified state by a simple shaking operation and may maintain a uniform emulsified state for a long time, and therefore, the flometoquin emulsifiable compositions can be an agrochemical formulation having favorable emulsifying dispersibility in preparation and application of a spray liquid.

### Test Example 3 (Biological Effect Test)

A control effect test on Bemisia tabaci imagoes was performed for the flometoquin emulsifiable compositions of Examples.

A cucumber leaf disc with a diameter of 7 cm was placed on absorbent cotton sufficiently moistened with water, with the underside leaves facing up, and the absorbent cotton was placed on a glass petri dish. About 30 to 50 Bemisia tabaci imagoes were released on the leaf disk, and fixation of the imagoes was confirmed. 385 µL of a dispersion liquid (agent dilution) obtained by diluting each of the flometoquin emulsifiable compositions of Examples 1000 times with tap water, was sprayed with an air brush (SPRAY-WORK BASIC AIRBRRUSH, Tamiya Co., Ltd.) from a point of 50 cm in height. After spraying, the glass petri dish was placed on a plastic cup (height: 125 mm, diameter: 100 mm, volume: 350 mL) such that the leaf disk faced the inner surface of the cup, in order to prevent escape of the Bemisia tabaci imagoes. Six hours after the spraying, normal individuals, dead individuals, and individuals showing an abnormal symptom were counted, and the knockdown rates were measured.

The abnormal symptom was defined as an individual who was alive but could not fly and fell down and writhed, or an individual who showed writhing symptoms on the leaf surface, and the knockdown rate was defined as a proportion of the number of dead insects and the number of abnormal insects in the total number of tested insects.

For a comparison, a commercially available flowable formulation of flometoquin (product name: FINESAVE Flowable, active ingredient content: 10%) was used, and a dispersion liquid diluted 1000 times or 2000 times with tap water was provided as a control formulation.

The test results are summarized in Table 13.

**[Table 13]**

| [Table 13] Biological Evaluation Test Results | | | |
|---|---|---|---|
| | | Biological test results | |
| | Dilution ratio | Amount of dropped active ingredient (gAI/10a) | Knockdown ratio 6 hours after spraying (%) |
| Example 1a | 1000 times | 5 | 82 |
| Example 6a | 1000 times | 5 | 74 |
| Example 7a | 1000 times | 5 | 69 |
| Example 8a | 1000 times | 5 | 71 |
| Example 9a | 1000 times | 5 | 80 |
| Example 10a | 1000 times | 5 | 75 |
| Example 11a | 1000 times | 5 | 80 |
| Example 12a | 1000 times | 5 | 70 |
| Example 13a | 1000 times | 5 | 71 |
| Example 14a | 1000 times | 5 | 65 |
| Example 15a | 1000 times | 5 | 68 |
| Example 16a | 1000 times | 5 | 66 |
| Example 17a | 1000 times | 5 | 78 |
| Example 18a | 1000 times | 5 | 77 |
| Example 21a | 1000 times | 5 | 78 |
| Example 22a | 1000 times | 5 | 76 |
| Example 24a | 1000 times | 5 | 73 |
| Example 25a | 1000 times | 5 | 84 |
| Example 26a | 1000 times | 5 | 62 |
| Example 29a | 1000 times | 5 | 68 |
| Example 31a | 1000 times | 5 | 59 |
| Example 32a | 1000 times | 5 | 51 |
| Example 33a | 1000 times | 5 | 69 |
| Control formulation (flowable formulation) | 1000 times | 10 | 35 |
| | 2000 times | 5 | 25 |

Compared to the control formulation, the flometoquin emulsifiable compositions of Examples acted immediately even at a low dose, and the control effect also showed a high value. From this, it was shown that the flometoquin emulsifiable composition of the present invention can be expected to have a high control effect on agricultural pests, and since the flometoquin emulsifiable composition has a remarkable effect even at a low dose, it is possible to reduce agrochemicals used for control.

The flometoquin emulsifiable composition of the present invention has excellent storage stability, and also has a favorable emulsified state at the time of water dilution. In addition, it is useful as a new agrochemical formulation of flometoquin because it exhibits improved insecticidal efficacy and/or an immediate effect of insecticidal effect as compared with existing flometoquin flowable formulations.

### Example 1b

5.1 parts by mass of pyridaben raw material (LogPow 6.37, purity 98.7%), 39.9 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether and formaldehyde condensate of polyoxyethylene distyryl phenyl ether (SORPOL SM-100PW (trade name), TOHO Chemical Industry Co., Ltd.) were mixed, and a pyridaben emulsifiable composition was prepared.

### Example 2b

A pyridaben emulsifiable composition was prepared in the same manner as in Example 1b, except that 39.9 parts by mass of N,N-dimethyldecanamide was changed to 59.9 parts by mass, and 40 parts by mass of methyl coconut fatty acid was changed to 20 parts by mass.

### Example 3b

A pyridaben emulsifiable composition was prepared in the same manner as in Example 1b, except that 39.9 parts by mass of N,N-dimethyldecanamide was changed to 19.9 parts by mass, and 40 parts by mass of methyl coconut fatty acid was changed to 60 parts by mass.

### Example 4b

A pyridaben emulsifiable composition was prepared in the same manner as in Example 1b, except that 40 parts by mass of methyl coconut fatty acid was changed to 40 parts by mass of methyl caprylate (TOENOL #2008-95 (trade name), Toei Chemical).

### Example 5b

A pyridaben emulsifiable composition was prepared in the same manner as in Example 1b, except that 40 parts by mass of methyl coconut fatty acid was changed to 40 parts by mass of methyl oleate (Kanto Chemical).

### Example 6b

10.2 parts by mass of pyridaben raw material (LogPow 6.37, purity 98.7%), 37.3 parts by mass of N,N-dimethyldecanamide (Rhodiasolv ADMA10 (trade name), Solvay), 37.5 parts by mass of methyl coconut fatty acid (EXCEPARL MC (trade name), Kao), and 15 parts by mass of a mixture (SORPOL SM-100PW (trade name), TOHO Chemical) of polyoxyethylene tristyryl phenyl ether, formaldehyde condensate of polyoxyethylene distyryl phenyl ether, and a dodecylbenzenesulfonic acid salt were mixed, and a pyridaben emulsifiable composition was prepared.

### Example 7b

5.4 parts by mass of a tolfenpyrad raw material (LogPow 5.61, purity 92.6%), 39.6 parts by mass of N,N-dimethyldecanamide (Rhodiasolv ADMA10 (trade name), Solvay), 40 parts by mass of methyl coconut fatty acid (EXEPARL MC (trade name), Kao), and 15 parts by mass of a mixture of polyoxyethylene tristyryl phenyl ether, formaldehyde condensate of polyoxyethylene distyryl phenyl ether, and a dodecylbenzenesulfonic acid salt (SORPOL SM-100PW (trade name), TOHO Chemical Industry Co., Ltd.) were mixed, and a tolfenpyrad emulsifiable composition was prepared.

### Example 8b

A tolfenpyrad emulsifiable composition was prepared in the same manner as in Example 7b, except that 39.6 parts by mass of N,N-dimethyldecanamide was changed to 59.6 parts by mass, and 40 parts by mass of methyl coconut fatty acid was changed to 20 parts by mass.

### Example 9b

A tolfenpyrad emulsifiable composition was prepared in the same manner as in Example 7b, except that 39.6 parts by mass of N,N-dimethyldecanamide was changed to 19.6 parts by mass, and 40 parts by mass of methyl coconut fatty acid was changed to 60 parts by mass.

### Example 10b

A tolfenpyrad emulsifiable composition was prepared in the same manner as in Example 7b, except that 39.6 parts by mass of N,N-dimethyldecanamide was changed to 39.6 parts by mass of a mixture of N,N-dimethyloctanamide and N,N-dimethyldecanamide (Hallcomid M-8-10 (trade name), Stepan).

### Example 11b

A tolfenpyrad emulsifiable composition was prepared in the same manner as in Example 7b, except that 39.6 parts by mass of N,N-dimethyldecanamide was changed to 39.6 parts by mass of a mixture of N,N-dimethyldodecanamide and N,N-dimethyltetradecanamide (Hallcomid M-12-14 (trade name), Stepan).

### Example 12b

A tolfenpyrad emulsifiable composition was prepared in the same manner as in Example 7b, except that 39.6 parts by mass of N,N-dimethyldecanamide was changed to 39.6 parts by mass of N,N-dimethyl 9-decenamide (Hallcomid 1025 (trade name), Stepan).

### Example 13b

A tolfenpyrad emulsifiable composition was prepared in the same manner as in Example 7b, except that 39.6 parts by mass of N,N-dimethyldecanamide was changed to 39.6 parts by mass of N,N-dimethyl 9-dodecenamide (Hallcomid 1225 (trade name), Stepan).

### Example 14b

5.1 parts by mass of a diafenthiuron raw material (LogPow 5.76, purity 92.6%), 39.9 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether, formaldehyde condensate of polyoxyethylene distyryl phenyl ether, and a dodecylbenzenesulfonic acid salt (SORPOL SM-100PW (trade name), TOHO Chemical Industry Co., Ltd.) were mixed, and a diafenthiuron emulsifiable composition was prepared.

### Example 15b

5.3 parts by mass of a chlorfenapyr raw material (LogPow 4.83, purity 94.8%), 39.7 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether, formaldehyde condensate of polyoxyethylene distyryl phenyl ether, and a dodecylbenzenesulfonic acid salt (SORPOL SM-100PW (trade name), TOHO Chemical Industry Co., Ltd.) were mixed, and a chlorfenapyr emulsifiable composition was prepared.

### Example 16b

A chlorfenapyr emulsifiable composition was prepared in the same manner as in Example 15b, except that 39.6 parts by mass of N,N-dimethyldecanamide was changed to 59.6 parts by mass, and 40 parts by mass of methyl coconut fatty acid was changed to 20 parts by mass.

### Example 17b

A chlorfenapyr emulsifiable composition was prepared in the same manner as in Example 15b, except that 39.6 parts by mass of N,N-dimethyldecanamide was changed to 19.6 parts by mass, and 40 parts by mass of methyl coconut fatty acid was changed to 60 parts by mass.

### Example 18b

5.1 parts by mass of fipronil raw material (LogPow 4.00, purity 96.0%), 39.9 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether and formaldehyde condensate of polyoxyethylene distyryl phenyl ether (SORPOL SM-100PW (trade name), TOHO Chemical Industry Co., Ltd.) were mixed, and a fipronil emulsifiable composition was prepared.

### Example 19b

A fipronil emulsifiable composition was prepared in the same manner as in Example 18b, except that 39.9 parts by mass of N,N-dimethyldecanamide was changed to 59.9 parts by mass, and 40 parts by mass of methyl coconut fatty acid was changed to 20 parts by mass.

### Example 20b

A fipronil emulsifiable composition was prepared in the same manner as in Example 18b, except that 39.9 parts by mass of N,N-dimethyldecanamide was changed to 19.9 parts by mass, and 40 parts by mass of methyl coconut fatty acid was changed to 60 parts by mass.

### Example 21b

5 parts by mass of α-cypermethrin raw material (LogPow 6.33, purity 99.6%), 40 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether, formaldehyde condensate of polyoxyethylene distyryl phenyl ether, and a dodecylbenzenesulfonic acid salt (SORPOL SM-100PW (trade name), TOHO Chemical Industry Co., Ltd.) were mixed, and an α-cypermethrin emulsifiable composition was prepared.

The composition of the agrochemical emulsifiable compositions prepared according to Examples 1b to 6b is shown in Table 14.

**[Table 14]**

| [Table 14: Examples 1b to 6b] | | | | | | | | |
|---|---|---|---|---|---|---|---|---|
| Component | | | Example 1b | Example 2b | Example 3b | Example 4b | Example 5b | Example 6b |
| Agrochemical active ingredient (A) | | Pyridaben (LogPow = 6.37) | 5.1 | 5.1 | 5.1 | 5.1 | 5.1 | 10.2 |
| Solvent (B) | (b1) | Methyl coconut fatty acid | 40 | 20 | 60 | - | - | 37.5 |
| | (b1) | Methyl caprylate | - | - | - | 40 | - | - |
| | (b1) | Methyl oleate | - | - | - | - | 40 | - |
| | (b2) | N,N-dimethyldecanamide | 39.9 | 59.9 | 19.9 | 39.9 | 39.9 | 37.3 |
| Emulsifier (C) | | Mixture of | 15 | 15 | 15 | 15 | 15 | 15 |
| | (c2) | polyoxyethylene tristyryl phenyl ether, | | | | | | |
| | (c2) | formaldehyde condensate of polyoxyethylene distyryl phenyl ether, and | | | | | | |
| | (cI) | dodecylbenzenesulfonic acid salt (**SORPOL SM-100PW)** | | | | | | |
| Total parts by mass | | | 100 | 100 | 100 | 100 | 100 | 100 |

| | | | | | | | | |
|---|---|---|---|---|---|---|---|---|
| (b1): Fatty acid methyl ester, (b2): Fatty acid amide (c1): Anionic surfactant, (c2): Nonionic surfactant | | | | | | | | |

The composition of the agrochemical emulsifiable compositions prepared according to Examples 7b to 9b is shown in Table 15.

**[Table 15]**

| [Table 15: Examples 7b to 9b] | | | | | |
|---|---|---|---|---|---|
| Component | | | Example 7b | Example 8b | Example 9b |
| Agrochemical active ingredient (A) | | Tolfenpyrad (LogPow = 5.61) | 5.4 | 5.4 | 5.4 |
| Solvent (B) | (b1) | Methyl coconut fatty acid | 40 | 20 | 60 |
| | (b2) | N,N-dimethyldecanamide | 39.6 | 59.6 | 19.6 |
| Emulsifier (C) | | Mixture of | 15 | 15 | 15 |
| | (c2) | polyoxyethylene tristyryl phenyl ether, | | | |
| | (c2) | formaldehyde condensate of polyoxyethylene distyryl phenyl ether, and | | | |
| | (c1) | dodecylbenzenesulfonic acid salt **(SORPOL SM-100PW)** | | | |
| Total parts by mass | | | 100 | 100 | 100 |

| | | | | | |
|---|---|---|---|---|---|
| (b1): Fatty acid methyl ester, (b2): Fatty acid amide (c1): Anionic surfactant, (c2): Nonionic surfactant | | | | | |

The composition of the agrochemical emulsifiable compositions prepared according to Examples 10b to 13b is shown in Table 16.

**[Table 16]**

| [Table 16: Examples 10b to 13b] | | | | | | |
|---|---|---|---|---|---|---|
| Component | | | Example 10b | Example 11b | Example 12b | Example 13b |
| Agrochemical active ingredient (A) | | Tolfenpyrad (LogPow = 5.61) | 5.4 | 5.4 | 5.4 | 5.4 |
| | (b1) | Methyl coconut fatty acid | 40 | 40 | 40 | 40 |
| | | Mixture of | 39.6 | - | - | - |
| | (b2) | N,N-dimethyloctanamide and | | | | |
| | (b2) | N,N-dimethyldecanamide | | | | |
| Solvent (B) | | Mixture of | - | 39.6 | - | - |
| | (b2) | N,N-dimethyldodecanamide and | | | | |
| | (b2) | N,N-dimethyltetradecanamide | | | | |
| | (b2) | N,N-dimethyl 9-decenamide | - | - | 39.6 | - |
| | (b2) | N,N-dimethyl 9-dodecenamide | - | - | - | 39.6 |
| Emulsifier (C) | | Mixture of | 15 | 15 | 15 | 15 |
| | (c2) | polyoxyethylene tristyryl phenyl ether, | | | | |
| | (c2) | formaldehyde condensate of polyoxyethylene distyryl phenyl ether, and | | | | |
| | (c1) | dodecylbenzenesulfonic acid salt (**SORPOL SM-100PW)** | | | | |
| Total parts by mass | | | 100 | 100 | 100 | 100 |

| | | | | | | |
|---|---|---|---|---|---|---|
| (b1): Fatty acid methyl ester, (b2): Fatty acid amide (c1): Anionic surfactant, (c2): Nonionic surfactant | | | | | | |

The composition of the agrochemical emulsifiable compositions prepared according to Examples 14b to 17b is shown in Table 17.

**[Table 17]**

| [Table 17: Examples 14b to 17b] | | | | | | |
|---|---|---|---|---|---|---|
| Component | | | Example 14b | Example 15b | Example 16b | Example 17b |
| Agrochemical active ingredient (A) | | Diafenthiuron (LogPow = 5.76) | 5.1 | - | - | - |
| | | chlorfenapyr (LogPow = 4.83) | - | 5.3 | 5.3 | 5.3 |
| Solvent (B) | (bI) | Methyl coconut fatty acid | 40 | 40 | 20 | 60 |
| | (b2) | N,N-dimethyldecanamide | 39.9 | 39.7 | 59.6 | 19.6 |
| Emulsifier (C) | | Mixture of | 15 | 15 | 15 | 15 |
| | (c2) | polyoxyethylene tristyryl phenyl ether, | | | | |
| | (c2) | formaldehyde condensate of polyoxyethylene distyryl phenyl ether, and | | | | |
| | (c1) | dodecylbenzenesulfonic acid salt **(SORPOL SM-100PW)** | | | | |
| Total parts by mass | | | 100 | 100 | 99.9 | 99.9 |

| | | | | | | |
|---|---|---|---|---|---|---|
| (b1): Fatty acid methyl ester, (b2): Fatty acid amide (c1): Anionic surfactant, (c2): Nonionic surfactant | | | | | | |

The composition of the agrochemical emulsifiable compositions prepared according to Examples 18b to 21b is shown in Table 18.

**[Table 18]**

| [Table 18: Examples 18b to 21b] | | | | | | |
|---|---|---|---|---|---|---|
| Component | | | Example 18b | Example 19b | Example 20b | Example 21b |
| Agrochemical active ingredient (A) | | Fipronil (LogPow = 4.00) | 5.1 | 5.1 | 5.1 | - |
| | | α-Cypermethrin (LogPow = 6.33) | - | - | - | 5 |
| Solvent (B) | (b1) | Methyl coconut fatty acid | 40 | 20 | 60 | 40 |
| | (b2) | N,N-dimethyldecanamide | 39.9 | 59.9 | 19.9 | 40 |
| Emulsifier (C) | | Mixture of | 15 | 15 | 15 | 15 |
| | (c2) | polyoxyethylene tristyryl phenyl ether, | | | | |
| | (c2) | formaldehyde condensate of polyoxyethylene distyryl phenyl ether, and | | | | |
| | (c1) | dodecylbenzenesulfonic acid salt **(SORPOL SM-100PW)** | | | | |
| Total parts by mass | | | 100 | 100 | 100 | 100 |

| | | | | | | |
|---|---|---|---|---|---|---|
| (b1): Fatty acid methyl ester, (b2): Fatty acid amide (c1): Anionic surfactant, (c2): Nonionic surfactant | | | | | | |

### Comparative Example 1b

5.6 parts by mass of spinosad raw material (LogPow 3.9, purity 90.4%), 39.4 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether and formaldehyde condensate of polyoxyethylene distyryl phenyl ether (SORPOL SM-100PW (trade name), TOHO Chemical Industry Co., Ltd.) were mixed, and a spinosad emulsifiable composition was prepared. However, a homogeneous composition was not obtained.

### Comparative Example 2b

5.3 parts by mass of an imidacloprid raw material (LogPow 0.57, purity 96.2%), 39.7 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether, formaldehyde condensate of polyoxyethylene distyryl phenyl ether, and a dodecylbenzenesulfonic acid salt (SORPOL SM-100PW (trade name), TOHO Chemical Industry Co., Ltd.) were mixed, and an imidacloprid emulsifiable composition was prepared. However, a homogeneous composition was not obtained.

### Comparative Example 3b

5.1 parts by mass of acetamiprid raw material (LogPow 0.8, purity 98.3%), 39.9 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether and formaldehyde condensate of polyoxyethylene distyryl phenyl ether (SORPOL SM-100PW (trade name), TOHO Chemical Industry Co., Ltd.) were mixed, and an acetamiprid emulsifiable composition was prepared. However, a homogeneous composition was not obtained.

### Comparative Example 4b

5.4 parts by mass of cyantraniliprole raw material (LogPow 1.94, purity 93.1%), 39.6 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a mixture of polyoxyethylene tristyryl phenyl ether and formaldehyde condensate of polyoxyethylene distyryl phenyl ether (SORPOL SM-100PW (trade name), TOHO Chemical Industry Co., Ltd.) were mixed, and a cyantraniliprole emulsifiable composition was prepared. However, a homogeneous composition was not obtained.

### Comparative Example 5b

5.1 parts by mass of pyridaben raw material (LogPow 6.37, purity 98.7%), 39.9 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of a dodecylbenzenesulfonic acid salt (SORPOL EX-15 (trade name), manufactured by TOHO Chemical Industry Co., Ltd.) were mixed, and a pyridaben emulsifiable composition was prepared.

### Comparative Example 6b

5.1 parts by mass of pyridaben raw material (LogPow 6.37, purity 98.7%), 39.9 parts by mass of N,N-dimethyldecanamide (Rhodiasolv ADMA10 (trade name), Solvay), 40 parts by mass of methyl coconut fatty acid (EXCEPARL MC (trade name), Kao), and 15 parts by mass of polyoxyethylene (9) tristyryl phenyl ether (SORPOL T-10 (trade name), manufactured by TOHO Chemical Industry Co., Ltd.) were mixed, and a pyridaben emulsifiable composition was prepared. However, a homogeneous composition was not obtained.

The composition of the agrochemical emulsifiable compositions prepared according to Comparative Examples 1b to 6b is shown in Table 19.

**[Table 19]**

| [Table 19: Comparative Examples 1b to 6b] | | | | | | | | | |
|---|---|---|---|---|---|---|---|---|---|
| Component | | | | Comparative Example 1b | Comparative Example 2b | Comparative Example 3b | Comparative Example 4b | Comparative Example 5b | Comparative Example 6b |
| Agrochemical active ingredient (A) | | Pyridaben | (LogPow = 6.37) | - | - | - | - | 5.1 | 5.1 |
| Agrochemical active ingredient (LogPow < 4) | | Spinosad | (LogPow = 3.9) | 5.6 | - | - | - | - | - |
| | | Imidacloprid | (LogPow = 0.57) | - | 5.3 | - | - | - | - |
| | | Acetamiprid | (LogPow = 0.8) | - | - | 5.1 | - | - | - |
| | | Cyantraniliprole | (LogPow = 1.94) | - | - | - | 5.4 | - | - |
| Solvent (B) | (b1) | Methyl coconut fatty acid | | 40 | 40 | 40 | 40 | 40 | 40 |
| | (b2) | N,N-dimethyldecanamide | | 39.4 | 39.7 | 39.9 | 39.6 | 39.9 | 39.9 |
| Emulsifier (C) | | Mixture of | | 15 | 15 | 15 | 15 | - | - |
| | (c2) | polyoxyethylene tristyryl phenyl ether, | | | | | | | |
| | (c2) | formaldehyde condensate of polyoxyethylene distyryl phenyl ether, and | | | | | | | |
| | (c1) | dodecylbenzenesulfonic acid salt **(SORPOL SM-100PW)** | | | | | | | |
| | (c1) | Dodecylbenzenesulfonic acid salt | | - | - | - | - | 15 | - |
| | (c2) | Polyoxyethylene (9) tristyryl phenyl ether | | - | - | - | - | - | 15 |
| Tota parts by mass | | | | 100 | 100 | 100 | 100 | 100 | 100 |

| | | | | | | | | | |
|---|---|---|---|---|---|---|---|---|---|
| (b1): Fatty acid methyl ester, (b2): Fatty acid amide (c1): Anionic surfactant, (c2): Nonionic surfactant | | | | | | | | | |

### Test Example 4 (Biological Effect Test)

For the agrochemical emulsifiable compositions according to Examples, an efficacy test on Bemisia tabaci imagoes was performed using commercially available formulations of the same agrochemical active ingredients as comparative control agents.

A cucumber leaf disc with a diameter of 7 cm was placed on absorbent cotton sufficiently moistened with water, with the underside leaves facing up, and the absorbent cotton was placed on a glass petri dish. About 30 to 50 Bemisia tabaci imagoes were released on the leaf disk, and fixation of the imagoes was confirmed. 385 µL or 770 µL (no spreader was added) of a diluted solution of the agent was sprayed with an air brush (SPRAY-WORK BASIC AIRBRRUSH, manufactured by Tamiya Co., Ltd.) from a point of 50 cm in height. After spraying, the glass petri dish was placed on a plastic cup (height: 125 mm, diameter: 100 mm, volume: 350 mL) such that the leaf disk faced the inner surface of the cup, in order to prevent escape of the Bemisia tabaci imagoes. After a lapse of a certain time, normal individuals, dead individuals, and individuals showing an abnormal symptom were counted, and the knockdown rates were measured. The abnormal symptom was defined as an individual who was alive but could not fly and fell down and writhed, or an individual who showed writhing symptoms on the leaf surface, and the knockdown rate was defined as a proportion of the number of dead insects and the number of abnormal insects in the total number of tested insects.

Flowable formulation of pyridaben (SANMITE Flowable (trade name) Nissan Chemical) was used as a comparative control agent for the pyridaben emulsifiable composition (Example 1b), an emulsion of tolfenpyrad (HACHI-HACHI Emulsion (trade name) OAT Agrio) was used as a comparative reference agent for the tolfenpyrad emulsifiable composition (Example 7b), a wettable powder of diafenthiuron (GAMBA Wettable Powder (trade name) Syngenta Japan) was used as a comparative control agent for the diafenthiuron emulsifiable composition (Example 14b), a flowable formulation of chlorfenapyr (KOTETSU Flowable (trade name) BASF Japan Ltd.) was used as a comparative control agent for the chlorfenapyr emulsifiable composition (Example 15b), a flowable formulation of fipronil (PRINCE Flowable (trade name) BASF Japan Ltd.) was used as a comparative control agent for the fipronil emulsifiable composition (Example 18b), and an emulsion of cypermethrin (AGROTHRIN Emulsion (trade name) SUMITOMO CHEMICAL COMPANY, LIMITED) was used as a comparative control agent for the cypermethrin emulsifiable composition (Example 21b).

The biological test results are summarized in Tables 20 to 25.

**[Table 20]**

| [Table 20] Biological Effect Test Results of Pyridaben Emulsifiable Composition (Example 1b) | | | | |
|---|---|---|---|---|
| Biological test results | | | | |
| | Dilution ratio | Amount of sprayed water (L/10a) | Amount of dropped active ingredient (gAl/10a) | Knockdown ratio 4 hours after spraying (%) |
| Example 1b | 1000 times | 100 | 5 | 84 |
| Control formulation: flowable formulation | 4000 times | 100 | 5 | 34 |

**[Table 21]**

| [Table 21] Biological Effect Test Results of Tolfenpyrad Emulsifiable Composition (Example 7b) | | | | |
|---|---|---|---|---|
| Biological test results | | | | |
| | Dilution ratio | Amount of sprayed water (L/10a) | Amount of dropped active ingredient (gAl/10a) | Knockdown ratio 4 hours after spraying (%) |
| Example 7b | 1000 times | 100 | 5 | 72 |
| Control formulation: emulsifiable concentrate | 3000 times | 100 | 5 | 40 |

**[Table 22]**

| [Table 22] Biological Effect Test Results of Diafenthiuron Emulsifiable Composition (Example 14b) | | | | |
|---|---|---|---|---|
| Biological test results | | | | |
| | Dilution ratio | Amount of sprayed water (L/10a) | Amount of dropped active ingredient (gAl/10a) | Knockdown ratio 4 hours after spraying (%) |
| Example 14b | 1000 times | 200 | 10 | 38 |
| Control formulation: wettable powder | 10000 times | 200 | 10 | 13 |

**[Table 23]**

| [Table 23] Biological Effect Test Results of Chlorfenapyr Emulsifiable Composition (Example 15b) | | | | |
|---|---|---|---|---|
| Biological test results | | | | |
| | Dilution ratio | Amount of sprayed water (L/10a) | Amount of dropped active ingredient (gAl/10a) | Knockdown ratio 4 hours after spraying (%) |
| Example 15b | 1000 times | 200 | 10 | 54 |
| Control formulation: flowable formulation | 2000 times | 200 | 10 | 2 |

**[Table 24]**

| [Table 24] Biological Effect Test Results of Fipronil Emulsifiable Composition (Example 18b) | | | | |
|---|---|---|---|---|
| Biological test results | | | | |
| | Dilution ratio | Amount of sprayed water (L/10a) | Amount of dropped active ingredient (gAl/10a) | Knockdown ratio 4 hours after spraying (%) |
| Example 18b | 1000 times | 200 | 10 | 70 |
| Control formulation: flowable formulation | 1000 times | 200 | 10 | 4 |

**[Table 25]**

| [Table 25] Biological Effect Test Results of Cypermethrin Emulsifiable Composition (Example 21b) | | | | |
|---|---|---|---|---|
| Biological test results | | | | |
| | Dilution ratio | Amount of sprayed water (L/10a) | Amount of dropped active ingredient (gAl/10a) | Knockdown ratio 4 hours after spraying (%) |
| Example 21b | 1000 times | 200 | 10 | 95 |
| Control formulation: emulsifiable concentrate | 1200 times | 200 | 10 | 29 |

All of the formulations of Examples acted faster than the comparative control agents, and the control effects also exhibited high values. Therefore, it was shown that by using the agrochemical emulsifiable compositions of the present invention, the amounts of the agrochemicals used for control can be reduced in an actual scene of usage.

### Test Example 5 (Emulsification Stability Test)

The emulsifiability of the agrochemical emulsifiable compositions of the present invention was evaluated.

For the compositions of Examples and Comparative Examples, 15-mL glass test tubes each containing 15 mL of water were prepared. 15 µL of each of the agrochemical emulsifiable compositions of Examples and Comparative Examples was added to the test tube so as to be equivalent to a 1000-fold dilution, the mixture was shaken 10 times, and the initial emulsified state was checked (initial evaluation). Thereafter, the mixture was allowed to stand for 30 minutes, and the emulsified state was checked again (evaluation after 30 minutes). The criteria for initial evaluation and evaluation after 30 minutes are as follows.

The test results are summarized in Table 26.

Evaluation criteria
∘: Uniform emulsified state
△: Uniform but coarse particles are recognized
×: Occurrence of creaming or separation is observed.

### [Table 26]

**[Table 26]**

| | Emulsifiability evaluation results | |
|---|---|---|
| | Initial value | After 30 minutes |
| Example 2b | ○ | ○ |
| Example 3b | ○ | ○ |
| Example 4b | ○ | ○ |
| Example 5b | ○ | ○ |
| Example 6b | ○ | ○ |
| Example 8b | ○ | ○ |
| Example 9b | ○ | ○ |
| Example 10b | ○ | ○ |
| Example 11b | ○ | ○ |
| Example 12b | ○ | ○ |
| Example 13b | ○ | ○ |
| Example 16b | ○ | ○ |
| Example 17b | ○ | ○ |
| Example 20b | ○ | ○ |
| Comparative Example 5b | × | × |

The compositions of Examples easily formed a uniform emulsified state as a whole, and could maintain a uniform emulsified state for a long time. On the other hand, in the formulations of Comparative Examples, coarse particles were observed immediately after the emulsified state was formed, and the occurrence of creaming and separation was observed. The agrochemical emulsifiable compositions are usually diluted with water to form an emulsified state and then sprayed, and it may take time until the agrochemical emulsifiable composition is actually sprayed. Therefore, when a uniform emulsified state may not be formed and creaming or the like occurs, there is a risk that the state of agent spraying to the crop may not be uniform, leading to deterioration of the effect and occurrence of phytotoxicity. However, it is considered that there is no such concern since the formulations of Examples may form a uniform emulsified state and maintain a uniform emulsified state for a long time.

The agrochemical emulsifiable composition of the present invention has a favorable emulsified state even at the time of water dilution and exhibits improved insecticidal efficacy and/or a faster insecticidal effect as compared with existing agrochemical products, and therefore, the agrochemical emulsifiable composition is useful as a new agrochemical insecticidal formulation.

## Claims

1. An agrochemical emulsifiable composition comprising:
an agrochemical active ingredient (A); a solvent (B); and
an emulsifier (C), wherein
the agrochemical active ingredient (A) has an octanol-water partition coefficient (LogPow) of 4.0 or more,
the solvent (B) is at least one selected from the group consisting of a fatty acid methyl ester (b1), a fatty acid amide (b2), and an aromatic hydrocarbon solvent (b3), and
the emulsifier (C) comprises an anionic surfactant (c1) and a nonionic surfactant (c2).

2. The agrochemical emulsifiable composition according to claim 1, comprising 1% to 20% by mass of the agrochemical active ingredient (A), 50% to 95% by mass of the solvent (B), and 1% to 30% by mass of the emulsifier (C), with respect to a total mass of the agrochemical emulsifiable composition.

3. The agrochemical emulsifiable composition according to claim 1 or 2, wherein the agrochemical active ingredient (A) is at least one selected from the group consisting of flometoquin, carbosulfan, benfuracarb, cadusafos, chlorpyrifos, prothiofos, profenofos, dienochlor, fipronil, fluxametamide, broflanilide, acrinathrin, allethrin, etofenprox, cyhalothrin, cyfluthrin, cypermethrin, silafluofen, tefluthrin, tralomethrin, bifenthrin, perethrin, fenvalerate, fenpropathrin, flucythrinate, fluvalinate, permethrin, indoxacarb, metaflumizone, abamectin, emamectin benzoate, milbemectin, lepimectin, acynonapyr, amitraz, flubendiamide, tebufenpyrad, tolfenpyrad, pyridaben, fenazaquin, pyrimidifen, fenpyroximate, cyenopyrafen, cyflumetofen, pyflubumide, acequinocyl, fluacrypyrim, diafenthiuron, propargite, tetradifon, chlorfenapyr, pyriproxyfen, tebufenozide, chlorfluazuron, teflubenzuron, novaluron, flufenoxuron, lufenuron, clofentezine, etoxazole, buprofezin, spirodiclofen, spiromesifen, and pyridalyl.

4. The agrochemical emulsifiable composition according to claim 3, wherein the agrochemical active ingredient (A) is at least one selected from the group consisting of flometoquin, pyridaben, tolfenpyrad, diafenthiuron, chlorfenapyr, fipronil, and cypermethrin.

5. The agrochemical emulsifiable composition according to claim 4, wherein the agrochemical active ingredient (A) is flometoquin.

6. The agrochemical emulsifiable composition according to claim 4, wherein the agrochemical active ingredient (A) is at least one selected from the group consisting of pyridaben, tolfenpyrad, diafenthiuron, chlorfenapyr, fipronil, and cypermethrin.

7. The agrochemical emulsifiable composition according to any one of claims 1 to 6, wherein the solvent (B) is at least two selected from the group consisting of a fatty acid methyl ester (b1), a fatty acid amide (b2), and an aromatic hydrocarbon solvent (b3).

8. The agrochemical emulsifiable composition according to claim 7, wherein the solvent (B) is a combination of the fatty acid methyl ester (b1) and the fatty acid amide (b2) or a combination of the fatty acid methyl ester (b1), the fatty acid amide (b2), and the aromatic hydrocarbon solvent (b3) .

9. The agrochemical emulsifiable composition according to claim 8, wherein the solvent (B) is a combination of the fatty acid methyl ester (b1) and the fatty acid amide (b2) and contains 15% to 70% by mass of the fatty acid methyl ester (b1) and 15% to 70% by mass of the fatty acid amide (b2) with respect to the total mass of the agrochemical emulsifiable composition, and a content of the solvent (B) is 60% to 90% by mass with respect to the total mass of the agrochemical emulsifiable composition.

10. The agrochemical emulsifiable composition according to any one of claims 1 to 6, wherein the solvent (B) is the fatty acid methyl ester (b1) or the fatty acid amide (b2).

11. The agrochemical emulsifiable composition according to any one of claims 1 to 10, wherein the fatty acid methyl ester (b1) is a saturated or unsaturated fatty acid methyl ester having 6 to 30 carbon atoms, or a mixture thereof.

12. The agrochemical emulsifiable composition according to claim 11, wherein the fatty acid methyl ester (b1) is methyl caprylate, methyl caprate, methyl laurate, methyl myristate, methyl palmitate, methyl oleate, methyl erucate, methyl rapeseed fatty acid, methyl coconut fatty acid, or a mixture thereof.

13. The agrochemical emulsifiable composition according to any one of claims 1 to 12, wherein the fatty acid amide (b2) is a saturated or unsaturated fatty acid amide having 6 to 20 carbon atoms, or a mixture thereof.

14. The agrochemical emulsifiable composition according to claim 13, wherein the fatty acid amide (b2) is N,N-dimethyloctanamide, N,N-dimethyldecanamide, N,N-dimethyldodecanamide, N,N-dimethyl 9-decenamide, N,N-dimethyl 9-dodecenamide, N,N-dimethyltetradecanamide, or a mixture thereof.

15. The agrochemical emulsifiable composition according to any one of claims 1 to 14, wherein the aromatic hydrocarbon solvent (b3) is alkylbenzene, alkylnaphthalene, diphenylethane, phenyl xylyl ethane, or a mixture thereof.

16. The agrochemical emulsifiable composition according to any one of claims 1 to 15, wherein the anionic surfactant (c1) is an alkylarylsulfonic acid salt, a dialkyl sulfosuccinic acid salt, a polyoxyalkylene (poly)arylphenyl ether sulfuric acid ester, a polyoxyalkylene (poly)arylphenyl ether phosphoric acid ester, a polyoxyethylene alkylaryl phosphoric acid ester, a polyoxyethylene alkyl phosphoric acid ester, or a mixture thereof.

17. The agrochemical emulsifiable composition according to claim 16, wherein the anionic surfactant (c1) is an alkylbenzenesulfonic acid salt.

18. The agrochemical emulsifiable composition according to any one of claims 1 to 17, wherein the nonionic surfactant (c2) is polyoxyalkylene castor oil, polyoxyalkylene hydrogenated castor oil, a polyoxyalkylene alkyl ether, a polyoxyethylene polyoxypropylene block copolymer-type surfactant, a polyoxyalkylene (poly)aryl phenyl ether, formaldehyde condensate of a polyoxyalkylene (poly)aryl phenyl ether, a polyoxyalkylene fatty acid ester, a polyoxyalkylene sugar fatty acid ester, polyoxyalkylene (poly)aryl aryl phosphoric acid ester, a (poly)glycerin fatty acid ester, and a sugar fatty acid ester, or a mixture thereof.

19. The agrochemical emulsifiable composition according to any one of claims 1 to 18, wherein the nonionic surfactant (c2) is polyoxyalkylene castor oil, a polyoxyalkylene alkyl ether, polyoxyalkylene (poly)aryl phenyl ether, formaldehyde condensate of a polyoxyalkylene (poly)aryl phenyl ether, and a polyoxyalkylene sugar fatty acid ester, or a mixture thereof.

20. An agrochemical solution formulation comprising the agrochemical emulsifiable composition according to any one of claims 1 to 19.

21. A method for controlling agricultural pests, the method comprising:
diluting the agrochemical emulsifiable composition according to any one of claims 1 to 19 or the agrochemical solution formulation according to claim 20 with water to prepare an agrochemical spray liquid; and
spraying the prepared agrochemical spray liquid.
